# EUROPEAN PATENT SPECIFICATION

(11) **EP 3 897 994 B1**
(45) Date of publication and mention of the grant of the patent: **04.10.2023**
(21) Application number: 18943580.3
(22) Date of filing: 18.12.2018
(51) Int. Cl.: B03D 1/02, B03D 1/14, B03B 7/00, C02F 1/24, C22B 3/20, C22B 11/00, C22B 26/12, B03D 103/02, C02F 103/16, B03D 1/08, B03D 1/001, C02F 1/00, C02F 9/00, C02F 1/52, C02F 11/14, C02F 11/121, C02F 101/10, C02F 103/10

(54) **METHOD AND ARRANGEMENT FOR PROCESS WATER TREATMENT**
VERFAHREN UND ANORDNUNG ZUR PROZESSWASSERBEHANDLUNG
PROCÉDÉ ET AGENCEMENT POUR UN TRAITEMENT D'EAU DE TRAITEMENT

(43) Date of publication of application: 27.10.2021
(73) Proprietor: Metso Outotec Finland Oy, 33900 Tampere (FI)
(72) Inventor: JANSSON, Kaj, 33250 Tampere (FI)
(74) Representative: Papula Oy
(86) International application number: PCT/FI2018/050943
(87) International publication number: WO 2020/128137

(56) References cited:
- WO-A1-03/045567
- WO-A1-2016/170437
- US-A- 2 144 254
- US-A- 3 622 087
- US-A- 3 782 539
- US-A- 5 837 210
- US-A1- 2006 226 051
- US-A1- 2017 106 378
- Azevedo A; Oliveira H A; Rubio J: "Treatment and water reuse of lead-zinc sulphide ore mill wastewaters by high rate dissolved air flotation", Minerals Engineering, vol. 127, 4 August 2018 (2018-08-04), pages 114-121, XP085457064, OXFORD, GB ISSN: 0892-6875, DOI: 10.1016/j.mineng.2018.07.011
- Tian Jia; Xu Longhua; Wu Houqin; Fang Shuai; Deng Wei; Peng Tiefeng; Sun Wei; Hu Yuehua: "A novel approach for flotation recovery of spodumene, mica and feldspar from a lithium pergamite ore", Journal of Cleaner Production, vol. 174, 31 October 2017 (2017-10-31), pages 625-633, XP085313486, ISSN: 0959-6526, DOI: 10.1016/j.jclepro.2017.10.331
- Li Si; Lu Dongfang; Chen Xinghua; Zheng Xiayu; Li Xudong; Chu Haoran; Wang Yuhua: "Industrial application of a modified pilot-scale Jameson cell for the flotation of spodumene ore in high altitude area", Power Technology - Electrostatic Phenomena in Particulate Processes, vol. 320, 25 July 2017 (2017-07-25), pages 358-361, XP085169083, ISSN: 0032-5910, DOI: 10.1016/j.powtec.2017.07.070
- ANDREY, K. ET: "Substantiation of the technological processes for effective extraction of PGM from dunites, Urals platinum belt", IMPC 2014 - 27th International Mineral Processing Congress, 31 October 2014 (2014-10-31), pages 1-9, XP055721520, Russia

## Description

### TECHNICAL FIELD

The current disclosure relates to a method and arrangement for treating process water of a flotation plant, and to a use of the arrangement.

### BACKGROUND

The quality of mineral ores is decreasing as best deposits are increasingly already in use or have been used. Therefore the mined ores may contain significantly less valuable material. In order to run profitable operations, it is necessary to liberate all valuable metals or other valuable materials from the deposits.

When valuable minerals are deposited in smaller pockets within a mother stone, there arises a need to grind ore to finer levels, typically to a mean particle size of less than 300 pm, and in case a regrinding circuit is utilised, even less than 100 pm, in order to release valuable material from the less-valuable or valueless matrix, before treating the particles comprising valuable material in a concentration process, such as flotation in a flotation plant. When the ores are ground into a finer particle size, naturally the amount of fine particles, i.e. particles having a mean particle size of less than 10 µm is increased. Fine particles disrupt the main flotation process for example by consuming excess amount of flotation chemicals. Ordinary dispersed air flotation, pneumatic flotation or column flotation processes are not very efficient in recovering fine, light particles because of the flotation gas bubble size of these flotation processes. E.g. froth flotation employs a bubble size range of 600 to 2500 pm, selected for creating sufficient buoyancy for relatively large and coarse ore particles having a particle size over 100 µm.

Removal of unwanted fine particles takes place by desliming the main ore stream in a classification circuit, the reject fraction of which is typically subjected to a gravitational solid-liquid separation in a slime thickener. However, the fine particle fraction may comprise a significant amount of valuable material which is lost if reject flows or flows of undesired material are simply discarded to tailings. In some cases, the amount of valuable material in the fines fraction may be 10 to 30 %, and therefore it would be very important to recover this material as well, to increase the economic feasibility of a beneficiation operation.

Typically, the gangue, tailings or underflows comprising undesired or valueless material removed in a flotation process is sent to a tailings dam where the long resident time, typically 20-40 days, is expected to sediment and separate the solids, as well as decompose residual flotation chemicals from the collected and reusable process water. The collected process water is then recirculated back into the beneficiation process.

Prior to leading the aforementioned fractions into a tailings dam, the material flows may be dewatered in various types of gravitational solid-liquid separators such as thickeners from which overflow or supernatant is recirculated into the main flotation process. From a classification circuit undesired material fraction may be subjected to dewatering in a slime thickener, and the fraction intended for a subsequent flotation stage or stages may be subjected to dewatering and/or conditioning in a flotation thickener. Overflow of water or supernatant from these are also collected, stored in recover water tanks and recirculated back into the flotation process to be used in various applications such as dilution water for grinding or conditioning.

Depending on the type of ore treated in a flotation plant, the overflows of water or supernatant, or the process water from those sources, may comprise a significant amount of valuable material in the form of fine particles. Further, the water may comprise residual flotation chemicals, other fine particles such as silicate-containing particles, colloidal and soluble compounds and microbes and/or compounds promoting microbiological growth. In general, this kind of recirculated process water collected from various points of the flotation plant is less than ideal for recirculating back into the flotation process, but more significantly, it can comprise a significant amount of valuable material in the form of fine particles carried over from the main flotation line operations.

Today, water shortage, ecological demands placed by legislation and public pressure, costs and extensive space requirements of the aforementioned conventional tailings methods for process water treatment increasingly put pressure to recirculate process waters as main processes in flotation become at least partially closed-loop systems in terms of water usage. Alternative methods for treatment of tailings flows that enables least partially closed-loop water systems may be needed. Examples of such systems are shown in US3622087 and US3782539.

A conventional tailings treatment method with typical resident time of 20-40 days may result in acceptable water quality, allowing the treated process water to be reused in the main flotation process, and in other process steps. Changing over to other tailings methods such as thickened tailings, paste, dry stacking or hybrids of these, will result in much shorter sedimentation time due to the new thickeners needed in these process steps. The shorter sedimentation times, around 3-8 h, or even shorter in cases where the sedimentation is used as a washing stage to separate coarse particle fraction (solid) from a fine particle fraction (liquid), result in more fines, residual chemicals and other harmful or detrimental substances ending up in the thickener overflow, and later in recycled or recirculated process water. Apart from comprising a significant fraction of fine particles with valuable material, these impurities in the recirculated process waters may affect negatively the main flotation process and final product quality if not properly handled prior to recycling the process water back into the main process. Overall, closed water systems result to problems in flotation process runnability and increases disturbances, which makes controlling the flotation process more challenging.

Increase of fine material in thickener overflow may increase the flotation chemical dosage or decrease recovery and quality of desired valuable material. Fines load may also be increased by the need to further comminute low quality ore material by grinding to a smaller particle size, in order for the ore to be in a form that allows recovery of valuable material. Build-up of fines, as well as impurities such as microbes and organic material affects subsequent dewatering negatively. Fine material, especially of silicate origin, disturb the ability of collector chemicals to function as intended because the silica-containing fines may have opposite surface potentials and may thus attach to mineral surfaces and cause steric effect that prevents collectors from attaching onto the particles, or a steric layer so thick that the collector molecule length is not sufficient to make the ore particles hydrophobic - apparent surface energy remains unmodified and attachment to flotation gas bubbles cannot happen. Further, fines comprising only undesired material are more difficult depress into underflow/tailings. Selectivity of reagents decreases with increasing fines amount. Fines in the form of compounds such as colloidal hydroxides and carbonates present in the flotation circuit may become combined and cause large surface areas that react with flotation chemicals and use them up.

Changing over to other tailings methods such as thickened tailings, paste, dry stacking or hybrids of these, will result in much shorter sedimentation time due to the new thickeners needed in these process steps. This leads to much shorter sedimentation time, 3-8 h, that result in more fines, residual chemicals and other harmful or detrimental substances ending up in the thickener overflow, and later in recycled process water. Chemicals and other compounds build up in a closed water loop, as these substances cannot be efficiently removed by standard dewatering operations. Thus, for example, a thickener overflow will comprise material that is difficult to settle, and residual chemicals that will negatively affect the main flotation process. These need to be removed from the overflow if process water is to be recirculated without causing problems in the main processes due to residual flotation chemicals etc. carried over from the dewatering. Fines may pose a problem especially as this kind of system does not depress fines efficiently due to the relatively short residence time. Also microbiological contaminants may cause problems.

### SUMMARY OF THE INVENTION

The method according to the current disclosure is characterized by what is presented in claim 1.

The arrangement according to the current disclosure is characterized by what is presented in claim 23.

The use of the arrangement according to the current disclosure is characterized by what is presented in claim 33.

A method of treating process water of a flotation plant for the recovery of a valuable material is disclosed. The flotation plant comprises a mineral flotation line comprising a grinding mill; a classification circuit for classifying a feed of ground ore from the grinding mill into classifier overflow and classifier underflow; and a mineral flotation circuit for treating classifier overflow as infeed of ore particles comprising valuable material suspended in slurry, the flotation circuit comprising a rougher part for the separation of slurry infeed into rougher overflow of recovered valuable material and rougher underflow of reject, and a cleaner part arranged to receive rougher overflow from the rougher part as slurry infeed, for the separation of slurry into cleaner overflow of recovered valuable material and cleaner underflow arranged to flow back into the rougher part as slurry infeed. The flotation plant further comprises a process water circuit for treating underflow and/or overflow of the mineral flotation line, the process water circuit comprising a gravitational solid-liquid separator for dewatering underflow and/or overflow of the mineral flotation line to separate sediment from supernatant comprising at least water and unrecovered fine particles comprising valuable material; and a recover water tank for collecting process water comprising overflow and/or underflow from the mineral flotation line. The method is characterized in that, prior to leading supernatant from the gravitational solid-liquid separator into the recover water tank, supernatant is subjected to cleaning flotation, in which at least 90 % of the flotation gas bubbles have a size from 0,2 to 250 µm, in a cleaning flotation unit for collecting at least unrecovered fine particles comprising valuable material; for separating fine particles comprising valuable material from the supernatant into cleaning flotation overflow as recovered valuable material; and for forming purified process water as cleaning flotation underflow; and in that purified process water is recirculated into the mineral flotation line, or collected into the recover water tank as collected process water.

In another aspect of the invention, an arrangement for of treating process water of a flotation plant for the recovery of a valuable material is disclosed. The flotation plant comprises a mineral flotation line comprising a grinding mill; a classification circuit for classifying a feed of ground ore from the grinding mill into classifier overflow and classifier underflow; and a mineral flotation circuit for treating ore particles comprising valuable material and suspended in slurry, the flotation circuit comprising a rougher part for the separation of slurry infeed into rougher overflow of recovered valuable material and rougher underflow of reject, and a cleaner part arranged to receive rougher overflow from the rougher part as slurry infeed, for the separation of slurry into cleaner overflow of recovered valuable material and cleaner underflow arranged to flow back into the rougher part as slurry infeed. The flotation plant further comprises a process water circuit for treating underflow and/or overflow of the mineral flotation line, the process water treatment circuit comprising a gravitational solid-liquid separator arranged to dewater underflow and/or overflow of the mineral flotation line to separate sediment from supernatant comprising at least water and unrecovered fine particles comprising valuable material; and a recover water tank for collecting process water comprising overflow and/or underflow from the mineral flotation line. The arrangement is characterized in that the water treatment circuit further comprises a cleaning flotation unit employing flotation gas bubbles of which at least 90 % have a size from 0,2 to 250 pm, operationally connected to the gravitational solid-liquid separator for receiving supernatant prior to it being led into the recover water tank, and arranged to collect at least unrecovered fine particles comprising valuable material; to separate fine particles comprising valuable material from the supernatant into cleaning flotation overflow as recovered valuable material; and to form purified process water as cleaning flotation underflow configured to be recirculated into the mineral flotation line, or collected into the recover water tank as collected process water.

In yet another aspect of the invention, use of the arrangement for of treating process water of a flotation plant for the recovery of a valuable material is disclosed, wherein the arrangement is used for recovering valuable material from ore having a density under 4 g/cm³, preferably 2,4 to 3,2 g/cm³.

With the invention the aforementioned problems in water recirculation and downsides associated with conventional solutions may be alleviated. Overflow or supernatant from a gravitational solid-liquid separator is subjected to cleaning flotation in a cleaning flotation unit so that fine particles, especially those comprising valuable material may be 1) floated and collected into overflow of the cleaning flotation - the collector chemicals carried over from the main flotation processes may act as collectors to the fine particles, or else additional chemicals may be utilised to further enhance the collection efficiency, 2) separated from the thus purified process water by the cleaning flotation step, and 3) collected away to be further treated as concentrate, thereby increasing the overall recovery rate of the flotation plant. In some instances, for example a desliming thickener overflow or supernatant may comprise as high as 40 % of valuable material, which would be lost if not collected in the cleaning flotation step or unit.

Especially in connection with easily comminuted ores, i.e. ores or minerals with relatively low density, such as spodumene (lithium aluminium inosilicate, LiAl (SiO₃)₂) or PGM minerals, a significant amount of fines are created in a grinding circuit, and further, in a regrinding circuit. Typically, these fines are removed from the ground material bound to flotation in a classifier circuit, especially in cyclones classifying the ground material into accept or overflow destined for the flotation process and reject or underflow of too-fine particles. To remove the fine particles from the classifier underflow, a desliming thickener is used to obtain fines-free process water for further use.

As discussed above, the fine particle fraction may comprise a significant amount of valuable material, for example lithium or platinum. By recovering that fine material fraction, instead of eventually losing the fine particles and the valuable material they comprise into tailings dam or recirculating them back into the main flotation line where they again most likely end up in the underflows, and additionally, may disrupt the flotation process, the overall recovery of valuable material may be increased with the invention.

Additionally, the resulting purified process water can be readily recirculated back into the main flotation process. As the purified process water comprises significantly less residual flotation chemicals and fine particles, it may not affect the main flotation process detrimentally.

As the overflow from the mineral or main flotation process resides relatively short time in the gravitational solid-liquid separator, the flotation chemicals, collectors carried over in overflow from the main flotation process, do not decompose, as would happen in a conventional tailings dam over time. These collector chemicals may then be utilised in the cleaning flotation step as collectors, thereby making the floating and collection of desired material possible, i.e. collection of fine particles, thus resulting in purified process water. At the same time, these residual flotation chemicals become used up, and they do not carry over back into the main mineral flotation process when the purified process water is recirculated back. Thus, the main flotation process is unaffected by such undesired flotation chemicals, making the controlling of the mineral flotation process easier.

In the cleaning flotation process, other colloidal material such as C, P, N present in very fine particles may also be removed, as well as any starch-based depressants present in the process water, thereby removing nutrients that would promote microbiological growth in the purified process water. This may improve the result of any subsequent water treatment stages such as filtering. For example, the removal of such material may prevent blocking of filter orifices of ceramic filters.

As the slurry or gravitational solid-liquid separator overflow comprises only fine particles (larger particles end up in sediment), the cleaning flotation may be energy-efficiently utilized at a stage where it is most efficient, i.e. for removing fine particles.

In an embodiment of the method, the process water circuit comprises a first gravitational solid-liquid separator for dewatering classifier underflow to separate first sediment from supernatant comprising at least water and unrecovered fine particles comprising valuable material; first sediment arranged to flow into the filtering circuit for the recovery of valuable material and supernatant collected into the recover water tank as collected process water.

In a further embodiment, prior to leading supernatant from the first gravitational solid-liquid separator into the recover water tank, supernatant is subjected to cleaning flotation, in which at least 90 % of the flotation gas bubbles have a size from 0,2 to 250 µm, in a first cleaning flotation unit for collecting at least unrecovered fine particles comprising valuable material; for separating fine particles comprising valuable material from supernatant into cleaning flotation overflow as recovered valuable material; and for forming purified process water as cleaning flotation underflow; and in that purified process water is recirculated into the mineral flotation line, or collected into the recover water tank as collected process water.

In an embodiment, the process water circuit comprises a second gravitational solid-liquid separator for dewatering classifier overflow to separate second sediment from supernatant comprising at least water and unrecovered fine particles comprising valuable material; second sediment led into the mineral flotation circuit as slurry infeed; and supernatant collected into the recover water tank as collected process water.

In an embodiment, the process water circuit comprises a third gravitational solid-liquid separator for dewatering cleaner overflow from the flotation circuit to separate third sediment from supernatant comprising at least water and unrecovered fine particles comprising valuable material; supernatant collected into the recover water tank as collected process water.

In an embodiment, the process water circuit comprises a fourth gravitational solid-liquid separator for dewatering rougher underflow from the flotation circuit to separate fourth sediment from supernatant comprising at least water and unrecovered fine particles comprising valuable material; supernatant collected into the recover water tank as collected process water.

In an embodiment, prior to recirculating collected process water from the recover water tank into the mineral flotation line, collected process water is subjected to cleaning flotation, in which at least 90 % of the flotation gas bubbles have a size from 0,2 to 250 µm, in a second cleaning flotation unit for collecting at least unrecovered fine particles comprising valuable material, for separating fine particles comprising valuable material from collected process water into cleaning flotation overflow as recovered valuable material, and for forming purified process water as cleaning flotation underflow; and in that purified process water is recirculated into the mineral flotation line.

Depending on the configuration of the flotation line, the process water circuit may comprise a number of gravitational solid-liquid separators configured to treat overflows and/or underflows from a number of sources in the flotation line. Supernatant or supernatants from these may then be treated in the cleaning flotation as needed, to recover fine particles comprising valuable material, in order to improve the overall recovery of valuable material of the flotation plant. In one particular embodiment, the underflow from the classification circuit is led, via a gravitational solid-liquid separator into a cleaning flotation step to ensure the recovery of fine particles comprising valuable material from the classification circuit, which often may comprise a significant amount of such fine particles.

In an embodiment, prior to leading overflow and/or underflow from the mineral flotation line to a gravitational solid-liquid separator, the concentration of overflow and/or underflow is adjusted to 0,5 to 15 w-%.

In a further embodiment, turbulent flow of overflow and/or underflow from the mineral flotation line is adjusted to a laminar flow as it is led into the gravitational solid-liquid separator.

In an embodiment, at least 40 % of fine particles comprising valuable material, unrecovered in the mineral flotation line, are recovered from supernatant of a gravitational solid-liquid separator.

In an embodiment, the residence time of overflow and/or underflow from the mineral flotation line in the gravitational solid-liquid separator is under 10 hours, preferably 0,5 to 8 hours.

A relatively short residence time means that the flotation chemicals, in particular the collector chemicals are not decomposed but are carried over with supernatant, and they may be utilised in the subsequent cleaning flotation step. Concurrently, the fine particles do not have time to descend into sediment, which would happen in time in the relatively low-turbulence gravitational solid-liquid separators. Adjusting the flow of underflow and/or overflow from the flotation line to display a laminar flow pattern, the separation or washing of fine particles from particles descending to sediment may be improved. By effecting a desired solids content into the sediment, the amount of solid tailings to be treated may be decreased.

In an embodiment, prior to leading supernatant from a gravitational solid-liquid separator into cleaning flotation, supernatant is led into a separator overflow tank.

A separator overflow tank may be used to control the flow of supernatant into the cleaning flotation unit, or into a mixing unit, if such is used. This may help in stabilizing the overall process water treatment operation, as the flow supernatant into the subsequent operational steps is controlled.

In an embodiment, prior to leading supernatant from a gravitational solid-liquid separator into cleaning flotation, supernatant is led into mixing unit for chemically conditioning supernatant by adding a coagulant and/or a flocculant to flocculate at least fine particles comprising valuable material in supernatant.

In a further embodiment, the coagulant is chosen from a group comprising: inorganic collector, aluminium salts, iron salts, organic coagulants.

In yet another embodiment, a coagulant is added into supernatant in an amount of 1 to 2000 ppm.

In an embodiment, the flocculant is chosen from a group comprising: natural polymers, synthetic flocculants.

In a further embodiment, a flocculant is added into supernatant in an amount of 1 to 100 ppm.

While normally there are enough flotation chemicals (collector chemicals) present as carry-over from the main flotation process in the supernatant, in some cases, it may be necessary to condition the supernatant before the cleaning flotation treatment, to ensure that enough of the fine particles comprising valuable material may be removed by the cleaning flotation unit. This may be done in a conventional mixing unit configured to allow addition of different chemicals, such as flocculants and/or coagulants, and treatment of fluid with those chemicals. The amount of coagulant and/or flocculant is chosen based on the process, and is highly directed by cost of the chemicals. Organic coagulants are more expensive than inorganic ones. Typically, flocculants are added in amounts under 10 ppm.

In an embodiment, the temperature of supernatant is adjusted to 2-60 °C prior to leading it into a cleaning flotation unit.

In an embodiment, the pH of supernatant is adjusted to 6-12 prior to leading in into a cleaning flotation unit.

The temperature and/or the pH of the supernatant may be inherent, i.e. caused by the preceding process steps or environment, or, when desired, the properties may be adjusted as needed, for example to optimise the cleaning flotation.

In an embodiment, the cleaning flotation unit is a dissolved gas flotation (DAF) unit.

DAF is a microflotation process which is used in various applications in water or effluent clarification. Solid particles are separated from liquid by using very small flotation gas bubbles, microbubbles. The microbubbles with a size range of 30 - 100 µm are generated by dissolving air or other flotation gas into the liquid under pressure. The bubbles are formed in a pressure drop when dispersion is released. The particles of solid form attach to the bubbles and rise to the surface. A formed, floating sludge is removed from the liquid surface with sludge rollers as DAF overflow. Chemicals may sometimes be needed to aid flocculation and increase solids removal efficiency. Typically, colloids removal is possible with efficient coagulation.

In an embodiment, the valuable material is Li.

In an embodiment, the valuable material is Pt.

In an embodiment of the arrangement, the process water circuit comprises a first gravitational solid-liquid separator arranged to dewater classifier underflow to separate first sediment from supernatant comprising at least water and unrecovered fine particles comprising valuable material; first sediment arranged to flow into the filtering circuit for the recovery of valuable material, and supernatant configured to be collected into the recover water tank as collected process water.

In a further embodiment, the water treatment circuit comprises a first cleaning flotation unit employing flotation gas bubbles of which at least 90 % have a size from 0,2 to 250 pm, operationally connected to the first gravitational solid-liquid separator for receiving supernatant, and arranged to collect at least unrecovered fine particles comprising valuable material; to separate fine particles comprising valuable material from supernatant into cleaning flotation overflow as recovered valuable material; and to form purified process water as cleaning flotation underflow configured to be recirculated into the mineral flotation line, or collected into the recover water tank as collected process water.

In an embodiment, the process water circuit comprises a second gravitational solid-liquid separator arranged to dewater classifier overflow to separate second sediment from supernatant comprising at least water and unrecovered fine particles comprising valuable material; second sediment arranged to flow into the mineral flotation circuit as slurry infeed, and supernatant configured to be collected into the recover water tank as collected process water,

In an embodiment, the process water circuit comprises a third gravitational solid-liquid separator arranged to dewater cleaner overflow from the mineral flotation circuit to separate third sediment from supernatant comprising at least water and unrecovered fine particles comprising valuable material; supernatant configured to be collected into the recover water tank as collected process water.

In an embodiment, the process water circuit comprises a fourth gravitational solid-liquid separator arranged to dewater rougher underflow from the mineral flotation circuit to separate fourth sediment from supernatant comprising at least water and unrecovered fine particles comprising valuable material; supernatant configured to be collected into the recover water tank as collected process water.

In an embodiment, the process water circuit further comprises a second cleaning flotation unit employing flotation gas bubbles of which at least 90 % have a size from 0,2 to 250 pm, operationally connected to the recover water tank for receiving collected process water, and arranged to collect at least unrecovered fine particles comprising valuable material, to separate fine particles comprising valuable material from collected process water into cleaning flotation overflow as recovered valuable material, and to form purified process water as cleaning flotation underflow; purified process water is configured to be recirculated into the mineral flotation line.

In an embodiment, the process water circuit comprises a separator overflow tank into which supernatant from a gravitational solid-liquid separator is configured to flow prior to being led into cleaning flotation.

In an embodiment, the process water circuit further comprises a mixing unit into which supernatant from a gravitational solid-liquid separator is configured to flow prior to being led into cleaning flotation, the mixing unit arranged to chemically condition supernatant to flocculate at least fine particles comprising valuable material in supernatant.

In an embodiment, the cleaning flotation unit is a dissolved gas flotation (DAF) unit.

In an embodiment of the use, the arrangement is used for recovering Li.

In an embodiment, the arrangement is used for recovering Li from spodumene.

In an embodiment, the arrangement is used for recovering Pt.

In an embodiment, the arrangement is used for recovering Pt from a PGM mineral.

The aim of the method and arrangement according to the present invention is to remove as much of the fine particles as possible from the mineral flotation line underflow and/or overflow. At the same time, as a side effect, residual flotation chemicals become used up and removed. Thus, the valuable material in the fine particles may be recovered, and overall recovery rate of the flotation line improved. In addition, as fine particles and residual chemicals remaining in the purified process water are detrimental to the main flotation process, and may decrease the quality and value of the end product (valuable metals/minerals), the problems associated with recirculating process waters back into the main flotation process may be alleviated. Both instances also decrease efficiency of the mineral flotation processes. Removal of excess fine particles and residual flotation chemicals may decrease the consumption of fresh flotation chemicals, and fresh water.

### BRIEF DESCRIPTION OF THE DRAWINGS

The accompanying drawings, which are included to provide a further understanding of the current disclosure and which constitute a part of this specification, illustrate embodiments of the disclosure and together with the description help to explain the principles of the current disclosure. In the drawings:

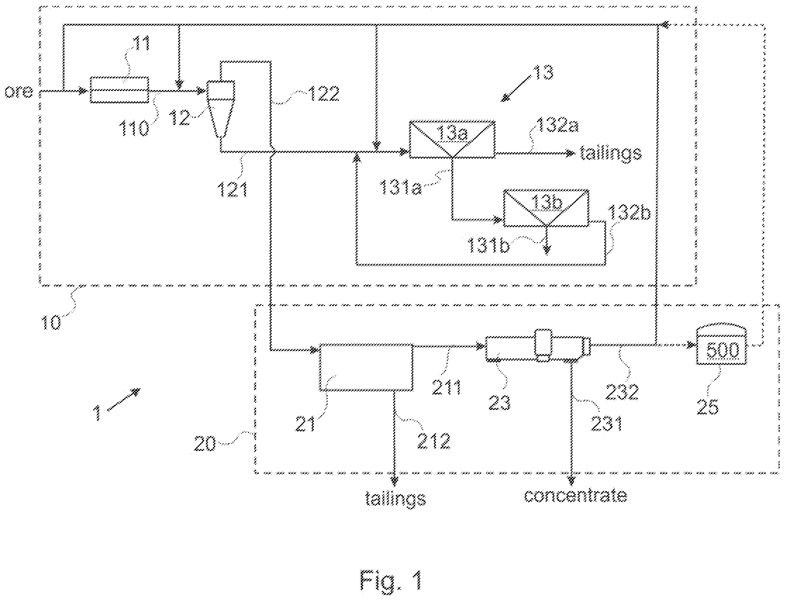

Figs. 1-3 are a simplified presentations of flotation arrangements in which embodiments of the method according to the invention may be used.

### DETAILED DESCRIPTION

Reference will now be made in detail to the embodiments of the present disclosure, an example of which is illustrated in the accompanying drawings.

The description below discloses some embodiments in such a detail that a person skilled in the art is able to utilize the flotation arrangement and its use, and the method based on the disclosure. Not all steps of the embodiments are discussed in detail, as many of the steps will be obvious for the person skilled in the art based on this disclosure.

For reasons of simplicity, item numbers will be maintained in the following exemplary embodiments in the case of repeating components.

The enclosed figures 1-3 illustrate a flotation plant 1 in a schematic manner. The figures are not drawn to proportion, and many of the components of are omitted for clarity. Some of the components are presented as boxes representing an entire process.

The embodiments described hereinbefore may be used in any combination with each other. Several of the embodiments may be combined together to form a further embodiment. A flotation cell to which the disclosure is related, may comprise at least one of the embodiments described hereinbefore. The invention and its embodiments are thus not limited to the examples described above; instead they may vary within the scope of the claims.

The flotation plant 1 comprises a mineral flotation line 10. In the mineral flotation line 10 there is a grinding mill 11 in which ore raw material, for example spodumene, is ground to a suitable particle size or a suitable particle size distribution prior to a flotation process, for example to a particle size of less than 300 µm, or less than 100 µm. At the same time, a fraction of fine particles, having a mean particle size of less than 10 pm, is created. In order to produce a slurry comprising particles having a suitable particle size range for flotation, a feed of ground ore is led into a classification circuit 12 comprising a number of classifiers such as cyclones and magnetic separators (not shown in the figures), as is commonly known in the field. For example, a cyclone separates ore particles according to their density, directing coarse particles into accept which may then be further classified in a magnetic separator to separate iron-comprising part of the ore particles, such as magnetite, from the feed of slurry into the flotation circuit. In short, the classification circuit 12 separates the ground ore into classifier overflow 121, to be treated in a mineral flotation circuit 13, and underflow 122 removed from the flotation line 10. The classification circuit 12 may be arranged in any suitable manner in accordance with the ore raw material and flotation process, as is self-evident to a person skilled in the art.

The flotation line 10 further comprises a mineral flotation circuit 13 for treating classifier overflow 121 as infeed of ore particles comprising valuable material suspended in slurry. Prior to leading classifier overflow 121 into the mineral flotation circuit 13, it may be conditioned and/or otherwise pretreated in any suitable conventional manner, to prepare classifier overflow 121 into an infeed of slurry, for example by adding flotation chemicals.

The mineral flotation circuit 13 comprises a rougher part 13a for the separation of slurry infeed into rougher overflow 131a of recovered valuable material, and rougher underflow 132a of reject. The mineral flotation circuit further comprises a cleaner part 13b arranged to receive rougher overflow 131a from the rougher part 13a as slurry infeed, for the separation of slurry into cleaner overflow 131b of recovered valuable material, and cleaner underflow 132b which is arranged to flow back into the rougher part 13a as slurry infeed, to be treated again in a conventional manner.

The flotation plant 1 further comprises a process water circuit 20 for treating underflow and/or overflow 121, 122, 131b, 132a of the flotation line 10. The process water circuit 20 comprises a gravitational solid-liquid separator 21 for dewatering underflow and/or overflow 121, 122, 131b, 132a of the mineral flotation line 10, to separate sediment 212 from supernatant 211. The supernatant 211 comprises at least water and unrecovered fine particles comprising valuable material. The gravitational solid-liquid separator 21 may be of any suitable type known in the technical field, and selected according to the process requirements of the flotation plant 1 and/or the flotation line 10, as is self-evident for a person skilled in the art. The gravitational solid-liquid separator 21 may, for example be a thickener such as a tailings thickener (conventional thickener, high-rate thickener, high concentration thickener or a paste thickener), or a clarifier.

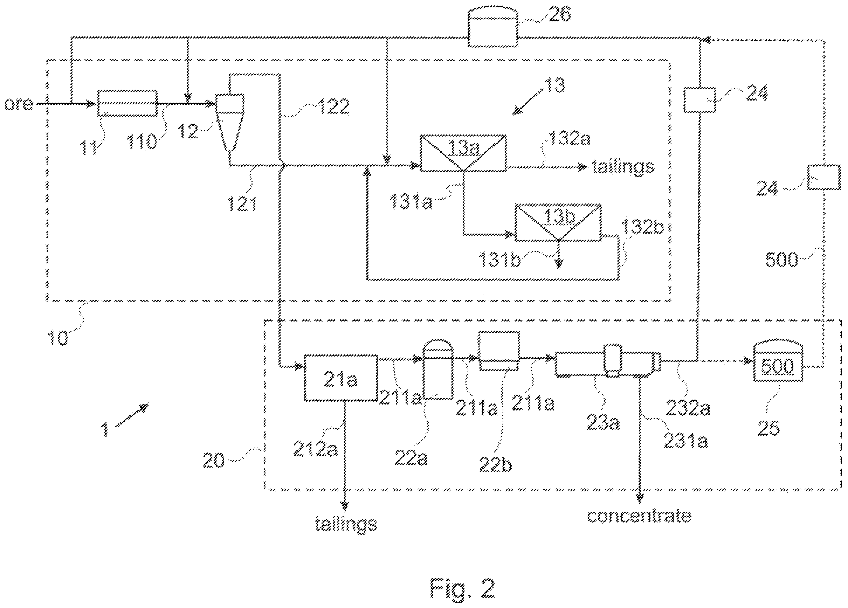

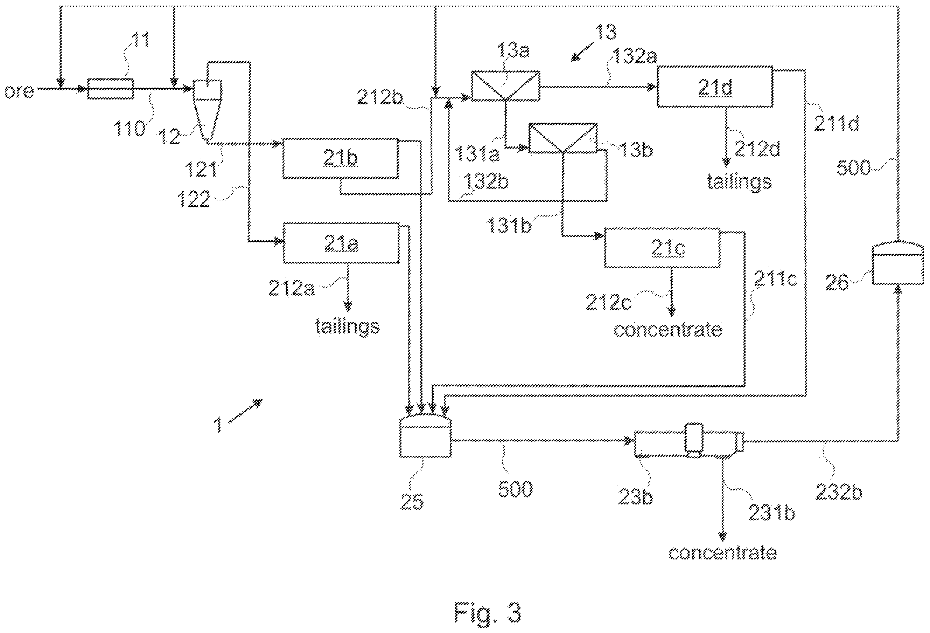

The process water circuit 20 comprises also a recover water tank 25 for collecting process water 500 comprising overflow and/or underflow from the mineral flotation line 10. There may also be another recover water tank 26 for collecting and/or storing purified process water 232, 232a, 232b prior recirculating it back into the flotation line 10 as process water 500 (see figures 2 and 3).

The gravitational solid-liquid separator 21 may be a first gravitational solid-liquid separator 21a arranged to dewater classifier underflow 122 to separate first sediment 212a from supernatant 211a comprising at least water and unrecovered fine particles comprising valuable material. First sediment 212a is arranged to flow into a filtering circuit (not shown in the figures for the recovery of valuable material, as is conventionally done, and supernatant 211a is configured to be collected into the recover water tank as collected process water. First sediment 212a is removed from the flotation plant 1 as tailings, and treated in a conventional manner, for example in a tailings dam (not shown in the figures.

Alternatively or additionally, the gravitational solid-liquid separator 21 may be a second gravitational solid-liquid separator 21b arranged to dewater classifier overflow 121 to separate second sediment 212b from supernatant 211b comprising at least water and unrecovered fine particles comprising valuable material. Second sediment 212b is arranged to flow into the mineral flotation circuit 13 as slurry infeed, and supernatant 211b is configured to be collected into the recover water tank 25 as collected process water 500.

Alternatively or additionally, the gravitational solid-liquid separator 21 may be a third gravitational solid-liquid separator 21c arranged to dewater cleaner overflow 131b from the mineral flotation circuit 13 to separate third sediment 212c from supernatant 211c comprising at least water, unrecovered fine particles comprising valuable material. The supernatant 211c from the third gravitational solid-liquid separator 21c may further comprise residual flotation chemicals and microbes and other soluble or colloidal substances as carry-over from the flotation line 10. Supernatant 211c is configured to be collected into the recover water tank 25 as collected process water 500. Third sediment 212c is recovered as concentrate and treated in a conventional manner to recover the desired valuable material.

Alternatively or additionally, the gravitational solid-liquid separator 21 may be a fourth gravitational solid-liquid separator 21d arranged to dewater rougher underflow 132a from the mineral flotation circuit 13 to separate fourth sediment 212d from supernatant 211d comprising at least water and unrecovered fine particles comprising valuable material. The supernatant 211d may further comprise residual flotation chemicals and microbes, and other soluble or colloidal substances as carry-over form the flotation line 10. Supernatant 211d is configured to be collected into the recover water tank 25 as collected process water 500. Fourth sediment 212d is removed from the flotation plant 1 as tailings.

The process water circuit 20 comprises a cleaning flotation unit 23 employing flotation gas bubbles of which at least 90 % have a size from 0,2 to 250 pm, operationally connected to the gravitational solid-liquid separator 21 for receiving supernatant 211 prior to it being led into the recover water tank 25. The cleaning flotation unit 23 is arranged 1) to collect at least unrecovered fine particles comprising valuable material; 2) to separate fine particles comprising valuable material from the supernatant into cleaning flotation overflow 231 as recovered valuable material; and 3) to form purified process water 232 as cleaning flotation underflow configured to be recirculated into the mineral flotation line 10, or collected into the recover water tank 25 as collected process water 500.

The cleaning flotation unit 23 may be a first cleaning flotation unit 23a employing flotation gas bubbles of which at least 90 % have a size from 0,2 to 250 pm, operationally connected to the first gravitational solid-liquid separator 21a for receiving supernatant 211a, and arranged 1) to collect at least unrecovered fine particles comprising valuable material; 2) to separate fine particles comprising valuable material from the supernatant into cleaning flotation overflow 231a as recovered valuable material; and 3) to form purified process water 232a as cleaning flotation underflow configured to be recirculated into the mineral flotation line 10, or collected into the recover water tank 25 as collected process water 500.

Alternatively or additionally, the cleaning flotation unit 23 may be a second cleaning flotation unit 23b employing flotation gas bubbles of which at least 90 % have a size from 0,2 to 250 pm, operationally connected to the recover water tank 25 for receiving collected process water 500, and arranged 1) to collect at least unrecovered fine particles comprising valuable material, 2) to separate fine particles comprising valuable material from the collected process water into cleaning flotation overflow 231b as recovered valuable material, and 3) to form purified process water 232b as cleaning flotation underflow; purified process water is configured to be recirculated into the mineral flotation line 10.

Depending on the configuration of the flotation plant 1, the process water circuit 20 may thus comprise 1 to 4 gravitational solid-liquid separators 21. Depending on their location within the flotation plant, the gravitational solid-liquid separators 21, 21a, 21b, 21c, 21d may be chosen from a list comprising: a slime thickener, a flotation thickener, a valuable material concentrate thickener, a tailings thickener.

In order to recover fine particles comprising valuable material from overflow and/or underflow of the flotation line 10, supernatant 211a, 211b, 211c, 211d from a gravitational solid-liquid separator or from a number of gravitational solid-liquid separators 21a, 21b, 21c, 21d may first be collected into the recover water tank 25, and the led into the second cleaning flotation unit 23b (Fig. 3).

Alternatively or additionally, supernatant 211a from the first gravitational solid-liquid separator 21a may be first led into the first cleaning flotation unit 23a, and then led into the recover water tank 25, or recirculated back into the flotation line 10 at some suitable point of the flotation line 10, for example as dilution water, i.e. the configuration may be a combination of the alternatives shown in figures 2 and 3.

The cleaning flotation units 23, 23a, 23b employs flotation gas to float particles collected by collector chemicals. In particular, flotation in the cleaning flotation units 23, 23a, 23b is executed by utilising microbubbles, or flotation gas bubbles having a particular size range. In the cleaning flotation and cleaning flotation units 23, 23a, 23b according to the invention, at least 90 % of the flotation gas bubbles fall into a size range of 2 to 250 µm. The cleaning flotation may employ dissolved gas flotation (DAF), and the cleaning flotation units 23, 23a, 23b may be a DAF unit. Other methods for effecting flotation with smaller sized flotation gas bubbles may also be employed, such as electrical double layer flotation or membrane flotation.

Additionally, the process water circuit 20 may comprise a filtering unit 24 to remove microbes and chemicals promoting microbiological growth, or to remove any other undesired chemicals from the purified process water (see Fig. 2). The filtering unit 24 may be of any type known in the field. In an embodiment, the filtering unit 24 comprises a ceramic filter or a number of ceramic filters. The filtering unit may be positioned after a cleaning flotation unit 23, or after a recover water tank 25, 26, so that purified process water is filtered before it is recirculated back into the flotation line 10.

Further, the process water circuit 20 may comprise a separator overflow tank 22a directly after the gravitational solid-liquid separator (see Fig. 2). The supernatant is led into the separator overflow tank 22a prior to directing it into the cleaning flotation unit, for example to control the volumetric flow into the cleaning flotation unit.

Further, additionally or alternatively, the process water circuit 20 may comprise a mixing unit 22b (see Fig. 2) after the gravitational solid-liquid separator, or after the separator overflow tank 22a, if one is employed. The mixing unit 22b may be of any type known in the field, arranged to enable the addition of desired chemicals such as coagulants and/or flocculants and the treatment of the supernatant by chemical conditioning so that at least the fine particles comprising valuable material may be flocculated prior to leading the supernatant into the cleaning flotation unit. Also other compounds such as soluble SiO₂ may be thus flocculated into solid form particles and thus subsequently removed from the purified process water. This may be required, should supernatant not comprise a sufficient amount of residual collector chemicals as carry-over from the flotation line 10, to ensure sufficient flocculation of fine particles comprising valuable material in the cleaning flotation unit, or ensure the creation of sufficiently large flocs in the cleaning flotation unit. Both the separator overflow tank 22a and the mixing unit 22b may be further utilised to adjust the temperature and/or pH of the supernatant, if desired, to prepare the supernatant for the cleaning flotation.

The process water circuit 20 may further comprise a filtering unit 24 to remove microbes and chemicals promoting microbiological growth, or to remove any other undesired chemicals from the purified process water, or process water 500 being recirculated into the flotation line 10 (see Fig. 2). The filtering unit 24 may be of any type known in the field. In an embodiment, the filtering unit 24 comprises a ceramic filter or a number of ceramic filters.

In the method for treating process water of the flotation arrangement 1, the following steps are effected.

Underflow and/or overflow from a mineral flotation line 10 is treated in a process water circuit 20 comprising a gravitational solid-liquid separator 21 for dewatering underflow and/or overflow of the mineral flotation line 10, to separate sediment 212 from supernatant 211 comprising at least water and fine particles comprising valuable material. The process water circuit 20 further comprises a recover water tank 25 for collecting and/or storing process water 500 comprising overflow and/or underflow from the mineral flotation line 10.

Prior to leading supernatant 211 from the gravitational solid-liquid separator 21 into the recover water tank 25, supernatant 211 is subjected to cleaning flotation in which at least 90 % of the flotation gas bubbles have a size from 0,2 to 250 µm, in a cleaning flotation unit 23. In the cleaning flotation, at least unrecovered fine particles comprising valuable material are recovered from supernatant 211. Fine particles comprising valuable material are separated from supernatant 211 into cleaning flotation overflow 231 as recovered valuable material or concentrate, and from there, led into conventional process step for recovering the valuable material (such as a filtering stage). Purified process water 232 is formed as cleaning flotation underflow. Purified process water 232 is recirculated into the mineral flotation line 10, at any suitable or required position of the mineral flotation line 10, for example as dilution water. Alternatively, purified process water may first be collected into the recover water tank 25 as collected process water 500, and then recirculated into the mineral flotation line 10, or into any other process stage of the flotation plant 1.

In an embodiment, the process water circuit 20 comprises a first gravitational solid-liquid separator 21a for dewatering classifier underflow 122 to separate first sediment 212a from supernatant 211a comprising at least water and unrecovered fine particles comprising valuable material. The first gravitational solid-liquid separator 21a may be a slime thickener. First sediment may be collected as concentrate and arranged to flow into a filtering circuit 14 for the recovery of valuable material. Supernatant is collected into the recover water tank 25 as collected process water 500.

Prior to leading supernatant 211a from the first gravitational solid-liquid separator 21a into the recover water tank 25, supernatant 211a is subjected to cleaning flotation, in which at least 90 % of the flotation gas bubbles have a size from 0,2 to 250 µm, in a first cleaning flotation unit 23a, 1) for collecting at least unrecovered fine particles comprising valuable material; 2) for separating fine particles comprising valuable material from the supernatant into cleaning flotation overflow 231a as recovered valuable material; and 3) for forming purified process water 232a as cleaning flotation underflow. Purified process water 232a is recirculated into the mineral flotation line 10, or collected into the recover water tank 25 as collected process water 500.

Alternatively or additionally, the process water circuit 20 may comprise a second gravitational solid-liquid separator 21b for dewatering classifier overflow 121 to separate second sediment 212b from supernatant 211b comprising at least water and unrecovered fine particles comprising valuable material. The second gravitational solid-liquid separator 21b may be a flotation thickener. Second sediment 212b is led into the mineral flotation circuit 13 as slurry infeed. Supernatant 211b is collected into the recover water tank 25 as collected process water 500.

Alternatively or additionally, the process water circuit 20 may comprise a third gravitational solid-liquid separator 21c for dewatering cleaner overflow 131b from the flotation circuit 13 to separate third sediment 212c from supernatant 211c comprising at least water and unrecovered fine particles comprising valuable material. The third gravitational solid-liquid separator 21c may be a valuable material concentrate thickener, for example a high-rate thickener. The supernatant 211c may further comprise residual flotation chemicals, colloidal and soluble compounds, and microbes. Supernatant 211c is collected into the recover water tank 25 as collected process water 500. Third sediment 212c may be collected as concentrate and led into further treatment to recover the target valuable material, for example in a filtering stage (not shown in figures).

Alternatively or additionally, the process water circuit 20 may comprise a fourth gravitational solid-liquid separator 21d for dewatering rougher underflow 132a from the flotation circuit 13 to separate fourth sediment 212d from supernatant 211d comprising at least water and unrecovered fine particles comprising valuable material. The fourth gravitational solid-liquid separator 21d may be a tailings thickener. Supernatant 211d may further comprise residual flotation chemicals, colloidal and soluble compounds, and microbes. Supernatant 211d is collected into the recover water tank 25 as collected process water 500. Fourth sediment 212d may be removed from the flotation plant 1 as tailings, and treated accordingly, for example in a tailings dam.

In an embodiment, prior to recirculating one or more supernatant 211a, 211b, 211c, 211d as collected process water 500 from the recover water tank 25 into the mineral flotation line 10, collected process water 500 is subjected to cleaning flotation, in which at least 90 % of the flotation gas bubbles have a size from 0,2 to 250 µm, in a second cleaning flotation unit 23b, 1) for collecting at least unrecovered fine particles comprising valuable material, 2) for separating fine particles comprising valuable material from the collected process water into cleaning flotation overflow 231b as recovered valuable material, and 3) for forming purified process water 232b as cleaning flotation underflow; that purified process water may then be recirculated into the mineral flotation line 10.

The cleaning flotation may be dissolved gas flotation (DAF), i.e. the cleaning flotation unit 23 may be a DAF unit.

Depending on the configuration of the flotation plant 1, the process water circuit 20 may thus comprise 1 to 4 gravitational solid-liquid separators 21. In order to recover fine particles comprising valuable material from overflow and/or underflow of the flotation line 10, supernatant 211a, 211b, 211c, 211d from a gravitational solid-liquid separator or from a number of gravitational solid-liquid separators 21a, 21b, 21c, 21d may first be collected into the recover water tank 25, and the led into the second cleaning flotation unit 23b (Fig. 3).

Alternatively or additionally, supernatant 211a from the first gravitational solid-liquid separator 21a may be first led into the first cleaning flotation unit 23a, and then led into the recover water tank 25, or recirculated back into the flotation line 10 at some suitable point of the flotation line 10, for example as dilution water, i.e. the configuration may be a combination of the alternatives shown in figures 2 and 3.

Prior to recirculating purified process water into the mineral flotation line 10, it may be collected into and/or stored in a second recover water tank 26.

Further, prior to recirculating purified process water into the mineral flotation line 10, or prior to recirculating process water 500 from a recover water tank 25, 26 into the mineral flotation line 10, water may be subjected to filtration step in a filtering unit 24, to remove microbes and chemicals promoting microbiological growth, or to remove any other undesired chemicals from the purified process water, or process water 500 being recirculated into the mineral flotation line 10 (see Fig. 2).

Prior to leading overflow and/or underflow 121, 122, 131b, 132a from the mineral flotation line 10 to a gravitational solid-liquid separator 21, 21a, 21b, 21c, 21d, the concentration of overflow and/or underflow 121, 122, 131b, 132a may be adjusted to 0,5 to 15 w-%, in any conventional manner, for example by using recirculated process water 500 as dilution water. Further, by this, turbulent flow of overflow and/or underflow from the mineral flotation line 10 may be adjusted to a laminar flow as it is led into the gravitational solid-liquid separator 21, 21a, 21b, 21c, 21d.

For example, in the fourth gravitational solid-liquid separator 21d, ("tailings thickener"), the incoming underflow 132a may have a concentration typically of 35 to 45 w-%. By lowering the concentration to 0,5 to 15 w-% by addition of process water 500, improved settling of solid particles in laminar conditions may be achieved, as ideal conditions for a washing step of fine particles is created. Generally, fine particles below 10 µm in particle size will then follow water into the supernatant rather than settling to the bottom of the gravitational solid-liquid separator as sediment. A person skilled in the art can adjust the suitable concentration with information of the size range and density of the material of the incoming underflow and/or overflow in regard to the rate of ascending or surface load of the gravitational solid-liquid separator.

The residence time of overflow and/or underflow 121, 122, 131b, 132a in a gravitational solid-liquid separator 21, 21a, 21b, 21c, 21d is under 10 hours. The residence time may be 0,5 to 8 hours, for example 1 hour; 2,25 hours; 3,5 hours; 4 hours; 5,75 hours; or 6,5 hours.

Temperature of supernatant 211, 211a, 211b, 211c, 211d may be adjusted to 2-60 °C, and the pH adjusted to 6-12 prior to leading it into a cleaning flotation unit 23, 23a, 23b. The pH may be, or may be adjusted to, for example 7; or 7,3; or 7,5; or 8; or 9,25. The temperature and the pH of the supernatant 211, 211a, 211b, 211c, 211d may be adjusted to optimize the cleaning flotation in the cleaning flotation unit 23, 23a, 23b, or the preceding process steps may cause the temperature and/or the pH of the supernatant to display certain values. The aforementioned properties of supernatant 211211a, 211b, 211c, 211d may be separately adjusted in the separator overflow tank 22a.

Depending on the type of raw material or ore treated in the flotation plant 1, a significant amount of fine particles comprising valuable material, unrecovered in the mineral flotation line 10, may be recovered from supernatant 211, 211a, 211b, 211c, 211d of a gravitational solid-liquid separator (21, 21a, 21b, 21c, 21d). In an embodiment, at least 40 % of fine particles comprising valuable material are recovered. In some cases, up to 90 % of fine particles comprising valuable material may be recovered.

After the cleaning flotation, cleaning flotation overflow 231, 231a, 231b is removed as concentrate, and purified process water 232, 232a, 232b is recirculated into the mineral flotation circuit 10. Prior to recirculating the purified process water 231 into the mineral flotation circuit 10, it may be subjected to a filtration step for removing chemicals promoting microbiological growth, or for removing other undesired or detrimental chemical compounds. In the filtration step, a filtering unit 24 comprising a ceramic filter may be used.

Hardness of purified process water 232, 232a, 232b may be unaffected by the process water circuit 20 and/or the method for treating process water, i.e. hardness of water of underflow and/or overflow 121, 122, 131b, 132a from the mineral flotation line 10 is the substantially the same as hardness of water of the purified process water 232, 232a, 232b, or process water 500, recirculated into the mineral flotation line 10.

In an additional method step, prior to leading supernatant 211, 211a, 211b, 211c, 211d from a gravitational solid-liquid separator 21, 21a, 21b, 21c, 21d into cleaning flotation, supernatant may be led into a separator overflow tank 22a. Additionally or alternatively, prior to leading supernatant 211, 211a, 211b, 211c, 211d from a gravitational solid-liquid separator 21, 21a, 21b, 21c, 21d into cleaning flotation, the supernatant may be led into mixing unit 22b for chemically conditioning the supernatant by adding a coagulant and/or a flocculant to flocculate at least fine particles comprising valuable material in supernatant. The coagulant may be chosen from a group comprising: inorganic coagulants, aluminium salts, iron salts, organic coagulants.

One possible inorganic coagulant is polyaluminium chloride (PAC). An inorganic coagulant may be added into the supernatant 211, 211a, 211b, 211c, 211d in the mixing unit 22b in an amount of 1 to 2000 ppm, for example in an amount of 5 ppm, 10 ppm, 25 ppm, 50 ppm, 75 ppm, 150 ppm, 225 ppm, 350 ppm, or 400 ppm. In an embodiment, 100 ppm PAC is added. An organic coagulant may be added into the supernatant 211, 211a, 211b, 211c, 211d in an amount of 5 to 200 ppm.

Alternatively or additionally, the supernatant 211, 211a, 211b, 211c, 211d may be conditioned in the mixing unit 22b by adding a flocculant to further assist in recovering fine particles comprising valuable material from supernatant 211, 211a, 211b, 211c, 211d by flocculating them. For example, natural flocculant such as starch or modified starch, or polysaccharides may be used. For example, synthetic flocculants may be used. The synthetic flocculants may display different charges. Examples of synthetic flocculants are: high molecular weight (over 500 000) flocculants such as polyacrylamides (negatively or positively charged, or neutral), or Mannich products (positively charged); and low molecular weight (under 500 000) flocculants such as polyamines (positively charged), polyepiamine (positively charged), polyDADMAC (positively charged), poly(ethylene)imines (positively charged), or polyethylene oxide (neutral).

A flocculant may be added in an amount of 1 to 100 ppm, for example in an amount of 1,25 ppm, 1,75 ppm, 2,25 ppm, 7,5 pp, or 12,25 ppm. In an embodiment, 2 ppm of a flocculant is added.

Use of the arrangement according to the above description may be employed in a flotation plant 1 intended for recovering valuable material from ore having a density below 4 g/cm³, preferably 2,4 to 3,2 g/cm³. For example, spodumene has a density of 3,11 g/cm³. In an embodiment, the valuable material is Li. In an embodiment, the valuable material is Pt. In an embodiment, the raw material of the flotation plant 1 is spodumene ore, from which lithium is intended to be recovered. In an embodiment, PGM minerals or other sources of Pt are utilised as raw material for the flotation plant 1, indented for recovering Pt.

## Claims

1. A method of treating process water of a flotation plant (1) for the recovery of a valuable material, the flotation plant comprising a mineral flotation line (10), the mineral flotation line comprising
- a grinding mill (11);
- a classification circuit (12) for classifying a feed of ground ore (110) from the grinding mill into classifier overflow (121) and classifier underflow (122); and
- a mineral flotation circuit (13) for treating classifier overflow as infeed of ore particles comprising valuable material suspended in slurry, the flotation circuit comprising a rougher part (13a) for the separation of slurry infeed into rougher overflow (131a) of recovered valuable material and rougher underflow (132a) of reject, and a cleaner part (13b) arranged to receive rougher overflow (131a) from the rougher part as slurry infeed, for the separation of slurry into cleaner overflow (131b) of recovered valuable material and cleaner underflow (132b) arranged to flow back into the rougher part as slurry infeed,
the flotation plant (1) further comprising a process water circuit (20) for treating underflow and/or overflow of the mineral flotation line, the process water circuit comprising a gravitational solid-liquid separator (21) for dewatering underflow and/or overflow of the mineral flotation line to separate sediment (212) from supernatant (211) comprising at least water and unrecovered fine particles comprising valuable material; and a recover water tank (25) for collecting process water (500) comprising overflow and/or underflow from the mineral flotation line (10),
**characterized in that**, prior to leading supernatant (211) from the gravitational solid-liquid separator (21) into the recover water tank (25), supernatant is subjected to cleaning flotation, in which at least 90 % of the flotation gas bubbles have a size from 0,2 to 250 µm, in a cleaning flotation unit (23) for collecting at least unrecovered fine particles comprising valuable material; for separating fine particles comprising valuable material from the supernatant into cleaning flotation overflow (231) as recovered valuable material; and for forming purified process water (232) as cleaning flotation underflow; and **in that** purified process water is recirculated into the mineral flotation line (10), or collected into the recover water tank (25) as collected process water (500).

2. The method according to claim 1, **characterized in that** the process water circuit (20) comprises a first gravitational solid-liquid separator (21a) for dewatering classifier underflow (122) to separate first sediment (212a) from supernatant (211a) comprising at least water and unrecovered fine particles comprising valuable material; first sediment arranged to flow into the filtering circuit (14) for the recovery of valuable material and supernatant collected into the recover water tank (25) as collected process water (500).

3. The method according to claim 2, **characterized in that** prior to leading supernatant (211a) from the first gravitational solid-liquid separator (21a) into the recover water tank (25), supernatant is subjected to cleaning flotation, in which at least 90 % of the flotation gas bubbles have a size from 0,2 to 250 µm, in a first cleaning flotation unit (23a) for collecting at least unrecovered fine particles comprising valuable material; for separating fine particles comprising valuable material from supernatant into cleaning flotation overflow (231a) as recovered valuable material; and for forming purified process water (232a) as cleaning flotation underflow; and **in that** purified process water is recirculated into the mineral flotation line (10), or collected into the recover water tank (25) as collected process water (500).

4. The method according to any one of claims 1 to 3, **characterized in that** the process water circuit (20) comprises a second gravitational solid-liquid separator (21b) for dewatering classifier overflow (121) to separate second sediment (212b) from supernatant (211b) comprising at least water and unrecovered fine particles comprising valuable material; second sediment (212b) led into the mineral flotation circuit (13) as slurry infeed; and supernatant (211b) collected into the recover water tank (25) as collected process water (500).

5. The method according to any one of claims 1 to 4, **characterized in that** the process water circuit (20) comprises a third gravitational solid-liquid separator (21c) for dewatering cleaner overflow (131b) from the flotation circuit (13) to separate third sediment (212c) from supernatant (211c) comprising at least water and unrecovered fine particles comprising valuable material; supernatant (211c) collected into the recover water tank (25) as collected process water (500) .

6. The method according to any one of claims 1 to 5, **characterized in that** the process water circuit (20) comprises a fourth gravitational solid-liquid separator (21d) for dewatering rougher underflow (132a) from the flotation circuit (13) to separate fourth sediment (212d) from supernatant (211d) comprising at least water and unrecovered fine particles comprising valuable material; supernatant (211d) collected into the recover water tank (25) as collected process water (500).

7. The method according to any one of claims 1 to 6, **characterized in that** prior to recirculating collected process water (500) from the recover water tank (50) into the mineral flotation line (10), collected process water is subjected to cleaning flotation, in which at least 90 % of the flotation gas bubbles have a size from 0,2 to 250 µm, in a second cleaning flotation unit (23b) for collecting at least unrecovered fine particles comprising valuable material, for separating fine particles comprising valuable material from collected process water into cleaning flotation overflow (231b) as recovered valuable material, and for forming purified process water (232b) as cleaning flotation underflow; and **in that** purified process water is recirculated into the mineral flotation line (10).

8. The method according to any one of claims 1 to 7, **characterized in that** prior to leading overflow and/or underflow from the mineral flotation line (10) to a gravitational solid-liquid separator (21, 21a, 21b, 21c, 21d), the concentration of overflow and/or underflow is adjusted to 0,5 to 15 w-%.

9. The method according to claim 8, **characterized in that** turbulent flow of overflow and/or underflow from the mineral flotation line (10) is adjusted to a laminar flow as it is led into the gravitational solid-liquid separator (21, 21a, 21b, 21c, 21d).

10. The method according to any one of claim 1 to 9, **characterized in that** at least 40 % of fine particles comprising valuable material, unrecovered in the mineral flotation line (10), are recovered from supernatant (211, 211a, 211b, 211c, 211d) of a gravitational solid-liquid separator (21, 21a, 21b, 21c, 21d).

11. The method according to any one of claims 1 to 10, **characterized in that** the residence time of overflow and/or underflow from the mineral flotation line (10) in the gravitational solid-liquid separator (21, 21a, 21b, 21c, 21d) is under 10 hours, preferably 0,5 to 8 hours.

12. The method according to any one of claims 1 to 11, **characterized in that** prior to leading supernatant (211, 211a, 211b, 211c, 211d) from a gravitational solid-liquid separator (21, 21a, 21b, 21c, 21d) into cleaning flotation, supernatant is led into a separator overflow tank (22a).

13. The method according to any one of claims 1 to 12, **characterized in that** prior to leading supernatant (211, 211a, 211b, 211c, 211d) from a gravitational solid-liquid separator (21, 21a, 21b, 21c, 21d) into cleaning flotation, the supernatant is led into mixing unit (22b) for chemically conditioning supernatant by adding a coagulant and/or a flocculant to flocculate at least fine particles comprising valuable material in supernatant.

14. The method according to claim 13, **characterized in that** the coagulant is chosen from a group comprising: inorganic collector, aluminium salts, iron salts, organic coagulants.

15. The method according to claim 13 or 14, **characterized in that** a coagulant is added into supernatant (211, 211a, 211b, 211c, 211d) in an amount of 1 to 2000 ppm.

16. The method according to any one of claims 13 to 15, **characterized in that** the flocculant is chosen from a group comprising: natural polymers, synthetic flocculants.

17. The method according to any one of claims 13 to 16, **characterized in that** a flocculant is added into supernatant (211, 211a, 211b, 211c, 211d) in an amount of 1 to 100 ppm.

18. The method according to any one of claims 1 to 17, **characterized in that** the temperature of supernatant (211, 211a, 211b, 211c, 211d) is adjusted to 2-60 °C prior to leading it into a cleaning flotation unit (23, 23a, 23b).

19. The method according to any one of claims 1 to 18, **characterized in that** the pH of supernatant is adjusted to 6-12 prior to leading in into a cleaning flotation unit (23, 23a, 23b).

20. The method according to any one of claims 1 to 19 **characterized in that** the cleaning flotation unit (23, 23a, 23b, 23c) is a dissolved gas flotation (DAF) unit.

21. The method according to any one of claims 1 to 20, **characterized in that** the valuable material is Li.

22. The method according to any one of claims 1 to 20, **characterized in that** the valuable material is Pt.

23. An arrangement for of treating process water of a flotation plant (1) for the recovery of a valuable material, the flotation plant comprising a mineral flotation line (10), the mineral flotation line comprising
- a grinding mill (11);
- a classification circuit (12) for classifying a feed of ground ore from the grinding mill into classifier overflow (121) and classifier underflow (122); and
- a mineral flotation circuit (13) for treating ore particles comprising valuable material and suspended in slurry, the mineral flotation circuit comprising a rougher part (13a) for the separation of slurry infeed into rougher overflow (131a) of recovered valuable material and rougher underflow (132a) of reject, and a cleaner part (13b) arranged to receive rougher overflow (131a) from the rougher part as slurry infeed, for the separation of slurry into cleaner overflow (131b) of recovered valuable material and cleaner underflow (132b) arranged to flow back into the rougher part as slurry infeed,
the flotation plant (1) further comprising a process water circuit (20) for treating underflow and/or overflow of the mineral flotation line, the process water treatment circuit comprising a gravitational solid-liquid separator (21) arranged to dewater underflow and/or overflow of the mineral flotation line to separate sediment (212) from supernatant (211) comprising at least water and unrecovered fine particles comprising valuable material; and a recover water tank (25) for collecting process water (500) comprising overflow and/or underflow from the mineral flotation line,
**characterized in that** the water treatment circuit (20) further comprises a cleaning flotation unit (23) employing flotation gas bubbles of which at least 90 % have a size from 0,2 to 250 pm, operationally connected to the gravitational solid-liquid separator (21) for receiving supernatant (211) prior to it being led into the recover water tank, and arranged to collect at least unrecovered fine particles comprising valuable material; to separate fine particles comprising valuable material from supernatant into cleaning flotation overflow (231) as recovered valuable material; and to form purified process water (232) as cleaning flotation underflow configured to be recirculated into the mineral flotation line (10), or collected into the recover water tank (25) as collected process water (500).

24. The arrangement according to claim 23, **characterized in that** the process water circuit (20) comprises a first gravitational solid-liquid separator (21a) arranged to dewater classifier underflow (122) to separate first sediment (212a) from supernatant (211a) comprising at least water and unrecovered fine particles comprising valuable material; first sediment arranged to flow into the filtering circuit (14) for the recovery of valuable material; supernatant configured to be collected into the recover water tank (25) as collected process water (500) .

25. The arrangement according to claim 24, **characterized in that** the water treatment circuit (20) comprises a first cleaning flotation unit (23a) employing flotation gas bubbles of which at least 90 % have a size from 0,2 to 250 pm, operationally connected to the first gravitational solid-liquid separator (21a) for receiving supernatant (211a), and arranged to collect at least unrecovered fine particles comprising valuable material; to separate fine particles comprising valuable material from supernatant into cleaning flotation overflow (231a) as recovered valuable material; and to form purified process water (232a) as cleaning flotation underflow configured to be recirculated into the mineral flotation line (10), or collected into the recover water tank (25) as collected process water (500).

26. The arrangement according to any one of claims 23 to 25, **characterized in that** the process water circuit (20) comprises a second gravitational solid-liquid separator (21b) arranged to dewater classifier overflow (121) to separate second sediment (212b) from supernatant (211b) comprising at least water and unrecovered fine particles comprising valuable material; second sediment (212b) arranged to flow into the mineral flotation circuit (13) as slurry infeed; and supernatant (211b) configured to be collected into the recover water tank (25) as collected process water (500).

27. The arrangement according to any one of claims 23 to 26, **characterized in that** the process water circuit (20) comprises a third gravitational solid-liquid separator (21c) arranged to dewater cleaner overflow (131b) from the mineral flotation circuit (13) to separate third sediment (212c) from supernatant (211c) comprising at least water and unrecovered fine particles comprising valuable material; supernatant (211c) configured to be collected into the recover water tank (25) as collected process water (500).

28. The arrangement according to any one of claims 23 to 27, **characterized in that** the process water circuit (20) comprises a fourth gravitational solid-liquid separator (21d) arranged to dewater rougher underflow (132a) from the mineral flotation circuit (13) to separate fourth sediment (212d) from supernatant (211d) comprising at least water and unrecovered fine particles comprising valuable material; supernatant (211d) configured to be collected into the recover water tank (25) as collected process water (500).

29. The arrangement according to any one of claims 23 to 28, **characterized in that** the process water circuit (20) further comprises a second cleaning flotation unit (23b) employing flotation gas bubbles of which at least 90 % have a size from 0,2 to 250 pm, operationally connected to the recover water tank (25) for receiving collected process water (500), and arranged to collect at least unrecovered fine particles comprising valuable material, to separate fine particles comprising valuable material from collected process water into cleaning flotation overflow (231b) as recovered valuable material, and to form purified process water (232b) as cleaning flotation underflow; purified process water is configured to be recirculated into the mineral flotation line (10).

30. The arrangement according to any one of claims 23 to 29, **characterized in that** the process water circuit (20) comprises a separator overflow tank (22a) into which supernatant (211, 211a, 211b, 211c, 211d) from a gravitational solid-liquid separator (21, 21a, 21b, 21c, 21d) is configured to flow prior to being led into cleaning flotation.

31. The arrangement according to any one of claims 23 to 30, **characterized in that** the process water circuit (20) further comprises a mixing unit (22b) into which supernatant (211, 211a, 211b, 211c, 211d) from a gravitational solid-liquid separator (21, 21a, 21b, 21c, 21d) is configured to flow prior to being led into cleaning flotation, the mixing unit arranged to chemically condition supernatant to flocculate at least fine particles comprising valuable material in supernatant.

32. The arrangement according to any one of claims 23 to 31, **characterized in that** the cleaning flotation unit (23, 23a, 23b, 23c) is a dissolved gas flotation (DAF) unit.

33. Use of the arrangement according to any one of claims 23 to 32 for recovering valuable material from ore having a density under 4 g/cm³, preferably 2,4 to 3,2 g/cm³.

34. The use according to claim 33 for recovering Li.

35. The use according to claim 34 for recovering Li from spodumene.

36. The use according to claim 33 for recovering Pt.

37. The use according to claim 36 for recovering Pt from a PGM mineral.

## Patentansprüche

1. Verfahren zur Behandlung von Prozesswasser einer Flotationsanlage (1) zum Gewinnen eines wertvollen Materials, wobei die Flotationsanlage eine mineralische Flotationslinie (10) umfasst, wobei die mineralische Flotationslinie umfasst:
- ein Mahlwerk (11);
- einen Klassifikationskreislauf (12) zum Klassifizieren einer Zufuhr von gemahlenem Erz (110) von dem Mahlwerk zu einem klassierten Überlauf (121) und einem klassierten Unterlauf (122); und
- einen mineralischen Flotationskreislauf (13) zum Behandeln von klassiertem Überlauf als Einlauf von Erzpartikeln, umfassend wertvolles Material, suspendiert in Schlamm, wobei der Flotationskreislauf umfasst: einen gröberen Teil (13a) für die Abtrennung von Schlammeinlauf in den gröberen Überlauf (131a) von gewonnenem wertvollem Material und den gröberen Unterlauf (132a) von Ausschuss, und ein Reinigungsteil (13b), welches so angeordnet ist, dass es gröberen Überlauf (131a) von dem gröberen Teil als Schlammeinlauf aufnimmt, für die Abtrennung von Schlamm in den Reinigungsüberlauf (131b) von gewonnenem wertvollem Material und den Reinigungsunterlauf (132b), der so angeordnet ist, dass er als Schlammeinlauf in den gröberen Teil zurückfließt,
wobei die Flotationsanlage (1) weiterhin einen Prozesswasserkreislauf (20) zum Behandeln von Unterlauf und/oder Überlauf der mineralischen Flotationslinie umfasst, wobei der Prozesswasserkreislauf einen gravitativen Fest-Flüssig-Trenner (21) zum Entwässern des Unterlaufs und/oder des Überlaufs der mineralischen Flotationslinie umfasst, um Sediment (212) von dem Überstand (211) zu trennen, umfassend wenigstens Wasser und nicht gewonnene feine Partikel, umfassend wertvolles Material; und einen Rückgewinnungswassertank (25) zum Sammeln von Prozesswasser (500), umfassend Überlauf und/oder Unterlauf von der mineralischen Flotationslinie (10),
**dadurch gekennzeichnet, dass** vor dem Leiten von Überstand (211) von dem gravitativen Fest-Flüssig-Trenner (21) in den Rückgewinnungswassertank (25) der Überstand einer Reinigungsflotation, wobei wenigstens 90% der Flotationsgasblasen eine Größe von 0,2 bis 250 µm haben, in einer Reinigungsflotationseinheit (23) zum Sammeln wenigstens nicht gewonnener feiner Partikel, umfassend wertvolles Material, unterzogen wird; zum Abtrennen feiner Partikel, umfassend wertvolles Material, von dem Überstand in den Reinigungsflotationsüberlauf (231) als gewonnenes wertvolles Material; und zum Bilden von aufgereinigtem Prozesswasser (232) als Reinigungsflotationsunterlauf; und dass aufgereinigtes Prozesswasser in die mineralische Flotationslinie (10) rezirkuliert wird oder in dem Rückgewinnungswassertank (25) als gesammeltes Prozesswasser (500) gesammelt wird.

2. Verfahren gemäß Anspruch 1, **dadurch gekennzeichnet, dass** der Prozesswasserkreislauf (20) einen ersten gravitativen Fest-Flüssig-Trenner (21a) zum Entwässern des klassierten Unterlaufs (122) umfasst, um erstes Sediment (212a) von Überstand (211a), umfassend wenigstens Wasser und nicht gewonnene feine Partikel, umfassend wertvolles Material, zu trennen; wobei das erste Sediment so vorgesehen ist, dass es in den Filterkreislauf (14) für die Gewinnung von wertvollem Material fließt, und Überstand in dem Rückgewinnungstank (25) als gesammeltes Prozesswasser gesammelt wird.

3. Verfahren gemäß Anspruch 2, **dadurch gekennzeichnet, dass** vor dem Laden von Überstand (211a) aus dem ersten gravitativen Fest-Flüssig-Trenner (21a) in den Rückgewinnungswassertank (25) Überstand einer Reinigungsflotation, wobei wenigstens 90% der Flotationsgasblasen eine Größe von 0,2 bis 250 µm haben, in einer ersten Reinigungsflotationseinheit (23a) zum Sammeln wenigstens nicht gewonnener feiner Partikel, umfassend wertvolles Material, unterzogen wird; zum Abtrennen feiner Partikel, umfassend wertvolles Material, von Überstand in den Reinigungsflotationsüberlauf (231a) als gewonnenes wertvolles Material; und zum Bilden von aufgereinigtem Prozesswasser (232a) als Reinigungsflotationsunterlauf; und dass aufgereinigtes Prozesswasser in die mineralische Flotationslinie (10) rezirkuliert wird oder in dem Rückgewinnungstank als gesammeltes Prozesswasser (500) gesammelt wird.

4. Verfahren gemäß irgendeinem der Ansprüche 1 bis 3, **dadurch gekennzeichnet, dass** der Prozesswasserkreislauf (20) einen zweiten gravitativen Fest-Flüssig-Trenner (21b) zum Entwässern des klassierten Überlaufs (121) umfasst, um zweites Sediment (212b) von Überstand (211b), umfassend wenigstens Wasser und nicht gewonnene feine Partikel, umfassend wertvolles Material, zu trennen; und Überstand (211b) in dem Rückgewinnungstank (25) als gesammeltes Prozesswasser (500) gesammelt wird.

5. Verfahren gemäß irgendeinem der Ansprüche 1 bis 4, **dadurch gekennzeichnet, dass** der Prozesswasserkreislauf (20) einen dritten gravitativen Fest-Flüssig-Trenner (21c) zum Entwässern des Reinigungsüberlaufs (131b) aus dem Flotationskreislauf (13) umfasst, um drittes Sediment (212c) von Überstand (211c), umfassend wenigstens Wasser und nicht gewonnene feine Partikel, umfassend wertvolles Material, zu trennen; Überstand (211c) in dem Rückgewinnungswassertank (25) als gesammeltes Prozesswasser (500) gesammelt wird.

6. Verfahren gemäß irgendeinem der Ansprüche 1 bis 5, **dadurch gekennzeichnet, dass** der Prozesswasserkreislauf (20) einen vierten gravitativen Fest-Flüssig-Trenner (21d) zum Entwässern des gröberen Unterlaufs (132a) aus dem Flotationskreislauf (13) umfasst, um viertes Sediment (212d) von Überstand (211d), umfassend wenigstens Wasser und nicht gewonnene feine Partikel, umfassend wertvolles Material, zu trennen; Überstand (211d) in dem Rückgewinnungswassertank (25) als gesammeltes Prozesswasser (500) gesammelt wird.

7. Verfahren gemäß irgendeinem der Ansprüche 1 bis 6, **dadurch gekennzeichnet, dass** vor dem Rezirkulieren von gesammeltem Prozesswasser (500) aus dem Rückgewinnungswassertank (50) in die mineralische Flotationslinie (10) gesammeltes Prozesswasser Reinigungsflotation, wobei wenigstens 90% der Flotationsgasblasen eine Größe von 0,2 bis 250 µm haben, in einer zweiten Reinigungsflotationseinheit (23b) zum Gewinnen wenigstens nicht gewonnener feiner Partikel, umfassend wertvolles Material, unterzogen wird, um feine Partikel, umfassend wertvolles Material, von gesammeltem Prozesswasser in Reinigungsflotationsüberlauf (231b) als gewonnenes wertvolles Material abzutrennen, und zum Bilden von aufgereinigtem Prozesswasser (232b) als Reinigungsflotationsunterlauf; und dass aufgereinigtes Prozesswasser in die mineralische Flotationslinie (10) rezirkuliert wird.

8. Verfahren gemäß irgendeinem der Ansprüche 1 bis 7, **dadurch gekennzeichnet, dass** vor dem Laden von Überlauf und/oder Unterlauf aus der mineralischen Flotationslinie (10) in einen gravitativen Fest-Flüssig-Trenner (21, 21a, 21b, 21c, 21d) die Konzentration des Überlaufs und/oder Unterlaufs auf 0,5 bis 15 Gew.-% eingestellt wird.

9. Verfahren gemäß Anspruch 8, **dadurch gekennzeichnet, dass** die turbulente Strömung von Überlauf und/oder Unterlauf aus der mineralischen Flotationslinie (10) auf eine laminare Strömung eingestellt wird, wenn sie in den gravitativen Fest-Flüssig-Trenner (21, 21a, 21b, 21c, 21d) geführt wird.

10. Verfahren gemäß irgendeinem des Anspruchs 1 bis 9, **dadurch gekennzeichnet, dass** wenigstens 40% der feinen Partikel, umfassend wertvolles Material, die in der mineralischen Flotationslinie (10) nicht gewonnen werden, aus dem Überstand (211, 211a, 211b, 211c, 211d) eines gravitativen Fest-Flüssig-Trenners (21, 21a, 21b, 21c, 21d) gewonnen werden.

11. Verfahren gemäß irgendeinem der Ansprüche 1 bis 10, **dadurch gekennzeichnet, dass** die Verweilzeit des Überlaufs und/oder Unterlaufs aus der mineralischen Flotationslinie (10) in dem gravitativen Fest-Flüssig-Trenner (21, 21a, 21b, 21c, 21d) unter 10 Stunden, bevorzugt 0,5 bis 8 Stunden beträgt.

12. Verfahren gemäß irgendeinem der Ansprüche 1 bis 11, **dadurch gekennzeichnet, dass** vor dem Laden von Überstand (211, 211a, 211b, 211c, 211d) aus einem gravitativen Fest-Flüssig-Trenner (21, 21a, 21b, 21c, 21d) in die Reinigungsflotation der Überstand in einen Trenner-Überlauftank (22a) geführt wird.

13. Verfahren gemäß irgendeinem der Ansprüche 1 bis 12, **dadurch gekennzeichnet, dass** vor dem Laden von Überstand (211, 211a, 211b, 211c, 211d) aus einem gravitativen Fest-Flüssig-Trenner (21, 21a, 21b, 21c, 21d) in die Reinigungsflotation der Überstand in die Mischeinheit (22b) geleitet wird für eine chemische Konditionierung des Überstands durch Zugabe eines Koagulans und/oder eines Flockungsmittels, um wenigstens feine Partikel, umfassend wertvolles Material, in dem Überstand auszuflocken.

14. Verfahren gemäß Anspruch 13, **dadurch gekennzeichnet, dass** das Koagulans aus einer Gruppe ausgewählt ist, umfassend: einen anorganischen Kollektor, Aluminiumsalze, Eisensalze, organische Koagulanzien.

15. Verfahren gemäß Anspruch 13 oder 14, **dadurch gekennzeichnet, dass** ein Koagulans in einer Menge von 1 bis 2000 ppm zu dem Überstand (211, 211a, 211b, 211c, 211d) zugegeben wird.

16. Verfahren gemäß irgendeinem der Ansprüche 13 bis 15, **dadurch gekennzeichnet, dass** das Flockungsmittel aus einer Gruppe ausgewählt ist, umfassend: natürliche Polymere, synthetische Flockungsmittel.

17. Verfahren gemäß irgendeinem der Ansprüche 13 bis 16, **dadurch gekennzeichnet, dass** ein Flockungsmittel in einer Menge von 1 bis 100 ppm zu dem Überstand (211, 211a, 211b, 211c, 211d) zugegeben wird.

18. Verfahren gemäß irgendeinem der Ansprüche 1 bis 17, **dadurch gekennzeichnet, dass** die Temperatur des Überstands (211, 211a, 211b, 211c, 211d) auf 2-60°C eingestellt wird, ehe er in eine Reinigungsflotationseinheit (23, 23a, 23b) geführt wird.

19. Verfahren gemäß irgendeinem der Ansprüche 1 bis 18, **dadurch gekennzeichnet, dass** der pH-Wert des Überstands auf 6-12 eingestellt wird, ehe er in eine Reinigungsflotationseinheit (23, 23a, 23b) geführt wird.

20. Verfahren gemäß irgendeinem der Ansprüche 1 bis 19, **dadurch gekennzeichnet, dass** die Reinigungsflotationseinheit (23, 23a, 23b, 23c) eine gelöstes-Gas-Flotations (dissolved gas flotation; DAF)-Einheit ist.

21. Verfahren gemäß irgendeinem der Ansprüche 1 bis 20, **dadurch gekennzeichnet, dass** das wertvolle Material Li ist.

22. Verfahren gemäß irgendeinem der Ansprüche 1 bis 20, **dadurch gekennzeichnet, dass** das wertvolle Material Pt ist.

23. Anordnung zum Behandeln von Prozesswasser aus einer Flotationsanlage (1) zum Gewinnen eines wertvollen Materials, wobei die Flotationsanlage eine mineralische Flotationslinie (10) umfasst, wobei die mineralische Flotationslinie umfasst:
- ein Mahlwerk (11);
- einen Klassifizierungskreislauf (12) zum Klassifizieren einer Zufuhr von gemahlenem Erz aus dem Mahlwerk in den klassierten Überlauf (121) und den klassierten Unterlauf (122); und
- einen mineralischen Flotationskreislauf (13) zum Behandeln von Erzpartikeln, umfassend wertvolles Material und suspendiert in einem Schlamm, wobei der mineralische Flotationskreislauf umfasst: einen gröberen Teil (13a) für die Abtrennung von Schlammeinlauf in den gröberen Überlauf (131a) von gewonnenem wertvollem Material und den gröberen Unterlauf (132a) von Ausschuss, und einen Reinigungsteil (13b), der so angeordnet ist, dass er den gröberen Überlauf (131a) von dem gröberen Teil als Schlammeinlauf aufnimmt, zum Abtrennen von Schlamm in den Reinigungsüberlauf (131b) von gewonnenem wertvollem Material, und der Reinigungsunterlauf (132b) so vorgesehen ist, dass er als Schlammeinlauf in den gröberen Teil zurückfließt,
wobei die Flotationsanlage (1) weiterhin einen Prozesswasserkreislauf (20) zum Behandeln des Unterlaufs und/oder Überlaufs der mineralischen Flotationslinie umfasst, wobei der Prozesswasserbehandlungskreislauf einen gravitativen Fest-Flüssig-Trenner (21) umfasst, der so angeordnet ist, dass er den Unterlauf und/oder Überlauf der mineralischen Flotationslinie entwässert, um Sediment (212) von Überstand (211), umfassend wenigstens Wasser und nicht gewonnene feine Partikel, umfassend wertvolles Material, zu trennen; und einen Rückgewinnungswassertank (25) zum Sammeln von Prozesswasser (500), umfassend Überlauf und/oder Unterlauf von der mineralischen Flotationslinie,
**dadurch gekennzeichnet, dass** der Wasserbehandlungskreislauf (20) weiterhin umfasst: eine Reinigungsflotationseinheit (23), die Flotationsgasblasen einsetzt, von denen wenigstens 90% eine Größe von 0,2 bis 250 µm haben, funktionsfähig verbunden mit dem gravitativen Fest-Flüssig-Trenner (21) für die Aufnahme von Überstand (211), ehe dieser in den Rückgewinnungswassertank geführt wird, und so angeordnet ist, dass er wenigstens nicht gewonnene feine Partikel, umfassend wertvolles Material, sammelt; zum Abtrennen feiner Partikel, umfassend wertvolles Material, von Überstand in den Reinigungsflotationsüberlauf (231) als gewonnenes wertvolles Material; und zum Bilden von aufgereinigtem Prozesswasser (232) als Reinigungsflotationsunterlauf, der so konfiguriert ist, dass er in die mineralische Flotationslinie (10) rezirkuliert wird oder in dem Rückgewinnungswassertank (25) als gesammeltes Prozesswasser (500) gesammelt wird.

24. Anordnung gemäß Anspruch 23, **dadurch gekennzeichnet, dass** der Prozesswasserkreislauf (20) einen ersten gravitativen Fest-Flüssig-Trenner (21a) umfasst, der so angeordnet ist, dass er klassierten Unterlauf (122) entwässert, um erstes Sediment (212a) von Überstand (211a), umfassend wenigstens Wasser und nicht gewonnene feine Partikel, umfassend wertvolles Material, zu trennen; erstes Sediment so vorgesehen ist, dass es in den Filterkreislauf (14) für die Gewinnung von wertvollem Material fließt; Überstand so konfiguriert ist, dass er in dem Rückgewinnungswassertank (25) als gesammeltes Prozesswasser (500) gesammelt wird.

25. Anordnung gemäß Anspruch 24, **dadurch gekennzeichnet, dass** der Wasserbehandlungskreislauf (20) eine erste Reinigungsflotationseinheit (23a) umfasst, die Flotationsgasblasen einsetzt, von denen wenigstens 90% eine Größe von 0,2 bis 250 µm haben, funktionsfähig verbunden mit dem ersten gravitativen Fest-Flüssig-Trenner (21a) für die Aufnahme von Überstand (211a) und so angeordnet, dass sie wenigstens nicht gewonnene feine Partikel, umfassend wertvolles Material, sammelt; zum Abtrennen feiner Partikel, umfassend wertvolles Material, von Überstand in den Reinigungsflotationsüberlauf (231a) als gewonnenes wertvolles Material; und zum Bilden von aufgereinigtem Prozesswasser (232a) als Reinigungsflotationsunterlauf, der so konfiguriert ist, dass er in die mineralische Flotationslinie (10) rezirkuliert wird oder in dem Rückgewinnungswassertank (25) als gesammeltes Prozesswasser (500) gesammelt wird.

26. Anordnung gemäß irgendeinem der Ansprüche 23 bis 25, **dadurch gekennzeichnet, dass** der Prozesswasserkreislauf (20) einen zweiten gravitativen Fest-Flüssig-Trenner (21b) umfasst, der so angeordnet ist, dass er den klassierten Überlauf (121) entwässert, um zweites Sediment (212b) von Überstand (211b), umfassend wenigstens Wasser und nicht gewonnene feine Partikel, umfassend wertvolles Material, zu trennen; zweites Sediment (212b) so angeordnet ist, dass es in den mineralischen Flotationskreislauf (13) als Schlammeinlauf fließt; und Überstand (211b) so konfiguriert ist, dass er in dem Rückgewinnungswassertank (25) als gesammeltes Prozesswasser (500) gesammelt wird.

27. Anordnung gemäß irgendeinem der Ansprüche 23 bis 26, **dadurch gekennzeichnet, dass** der Prozesswasserkreislauf (20) einen dritten gravitativen Fest-Flüssig-Trenner (21c) umfasst, der so angeordnet ist, dass er den Reinigungsüberlauf (131b) von dem mineralischen Flotationskreislauf (13) entwässert, um drittes Sediment (212c) von Überstand (211c), umfassend wenigstens Wasser und nicht gewonnene feine Partikel, umfassend wertvolles Material, zu trennen; Überstand (211c) so konfiguriert ist, dass er in dem Rückgewinnungswassertank (25) als gesammeltes Prozesswasser (500) gesammelt wird.

28. Anordnung gemäß irgendeinem der Ansprüche 23 bis 27, **dadurch gekennzeichnet, dass** der Prozesswasserkreislauf (20) einen vierten gravitativen Fest-Flüssig-Trenner (21d) umfasst, der so angeordnet ist, dass er den gröberen Unterlauf (132a) von dem mineralischen Flotationskreislauf (13) entwässert, um viertes Sediment (212d) von Überstand (211d), umfassend wenigstens Wasser und nicht gewonnene feine Partikel, umfassend wertvolles Material, zu trennen; Überstand (211d) so konfiguriert ist, dass er in dem Rückgewinnungswassertank (25) als gesammeltes Prozesswasser (500) gesammelt wird.

29. Anordnung gemäß irgendeinem der Ansprüche 23 bis 28, **dadurch gekennzeichnet, dass** der Prozesswasserkreislauf (20) weiterhin eine zweite Reinigungsflotationseinheit (23b) umfasst, die Flotationsgasblasen einsetzt, von denen wenigstens 90% eine Größe von 0,2 bis 250 µm haben, funktionsfähig verbunden mit dem Rückgewinnungswassertank (25) für die Aufnahme von gesammeltem Prozesswasser (500) und so angeordnet, dass sie wenigstens nicht gewonnene feine Partikel, umfassend wertvolles Material, sammelt, um feine Partikel, umfassend wertvolles Material, von gewonnenem Prozesswasser in den Reinigungsflotationsüberlauf (231b) als gewonnenes wertvolles Material abzutrennen und aufgereinigtes Prozesswasser (232b) als Reinigungsflotationsunterlauf zu bilden; aufgereinigtes Prozesswasser so konfiguriert ist, dass es in die mineralische Flotationslinie (10) rezirkuliert wird.

30. Anordnung gemäß irgendeinem der Ansprüche 23 bis 29, **dadurch gekennzeichnet, dass** der Prozesswasserkreislauf (20) einen Trenner-Überlauftank (22a) umfasst, der so konfiguriert ist, dass Überstand (211, 211a, 211b, 211c, 211d) von einem gravitativen Fest-Flüssig-Trenner (21, 21a, 21b, 21c, 21d) hineinfließt, ehe er in die Reinigungsflotation geführt wird.

31. Anordnung gemäß irgendeinem der Ansprüche 23 bis 30, **dadurch gekennzeichnet, dass** der Prozesswasserkreislauf (20) weiterhin eine Mischeinheit (22b) umfasst, die so konfiguriert ist, dass Überstand (211, 211a, 211b, 211c, 211d) von einem gravitativen Fest-Flüssig-Trenner (21, 21a, 21b, 21c, 21d) dort hineinfließt, ehe er in die Reinigungsflotation geführt wird, die Mischeinheit so vorgesehen ist, dass sie Überstand chemisch so konditioniert, dass wenigstens feine Partikel, umfassend wertvolles Material, in Überstand ausflocken.

32. Anordnung gemäß irgendeinem der Ansprüche 23 bis 31, **dadurch gekennzeichnet, dass** die Reinigungsflotationseinheit (23, 23a, 23b, 23c) eine gelöstes-Gas-Flotations (dissolved gas flotation; DAF)-Einheit ist.

33. Verwendung der Anordnung gemäß irgendeinem der Ansprüche 23 bis 32 zum Gewinnen von wertvollem Material aus Erz mit einer Dichte unter 4 g/cm³, bevorzugt 2,4 bis 3,2 g/cm³.

34. Verwendung gemäß Anspruch 33 zur Gewinnung von Li.

35. Verwendung gemäß Anspruch 34 zur Gewinnung von Li aus Spodumen.

36. Verwendung nach Anspruch 33 zur Gewinnung von Pt.

37. Verwendung nach Anspruch 36 zur Gewinnung von Pt aus einem PGM-Mineral.

## Revendications

1. Méthode de traitement d'eau de procédé d'une installation de flottation (1) pour la récupération d'un matériau de valeur, l'installation de flottation comprenant une ligne de flottation minérale (10), la ligne de flottation minérale comprenant
- un broyeur (11) ;
- un circuit de classification (12) pour classer une charge de minerai broyé (110) provenant du broyeur en une surverse de classificateur (121) et une sousverse de classificateur (122) ; et
- un circuit de flottation (13) minérale pour traiter une surverse de classificateur en tant qu'alimentation en particules de minerai comprenant le matériau de valeur en suspension dans une bouillie, le circuit de flottation comprenant une partie de dégrossissage (13a) pour la séparation d'une alimentation en bouillie en une surverse de dégrossissage (131a) de matériau de valeur récupéré et une sousverse de dégrossissage (132a) de rejet, et une partie de nettoyage (13b) agencée pour recevoir la surverse de dégrossissage (131a) provenant de la partie de dégrossissage en tant qu'alimentation en bouillie, pour la séparation de la bouillie en une surverse de nettoyage (131b) de matériau de valeur récupéré et une sousverse de nettoyage (132b) agencée pour refluer dans la partie de dégrossissage en tant qu'alimentation en bouillie,
l'installation de flottation (1) comprenant en outre un circuit d'eau de procédé (20) pour traiter une sousverse et/ou une surverse de la ligne de flottation minérale, le circuit d'eau de procédé comprenant un séparateur solide-liquide gravitationnel (21) pour égoutter la sousverse et/ou la surverse de la ligne de flottation minérale pour séparer un sédiment (212) d'un surnageant (211) comprenant au moins de l'eau et des particules fines non récupérées comprenant le matériau de valeur ; et un réservoir d'eau de récupération (25) pour collecter de l'eau de procédé (500) comprenant la surverse et/ou la sousverse provenant de la ligne de flottation minérale (10),
**caractérisée en ce que**, avant de diriger le surnageant (211) provenant du séparateur solide-liquide gravitationnel (21) dans le réservoir d'eau de récupération (25), le surnageant est soumis à une flottation de nettoyage, dans laquelle au moins 90 % des bulles de gaz de flottation ont une taille de 0,2 à 250 µm, dans une unité de flottation de nettoyage (23) pour collecter au moins des particules fines non récupérées comprenant le matériau de valeur ; pour séparer des particules fines comprenant le matériau de valeur du surnageant pour obtenir une surverse de flottation de nettoyage (231) en tant que matériau de valeur récupéré ; et pour former de l'eau de procédé purifiée (232) en tant que sousverse de flottation de nettoyage ; et **en ce que** l'eau de procédé purifiée est remise en circulation dans la ligne de flottation minérale (10), ou collectée dans le réservoir d'eau de récupération (25) en tant qu'eau de procédé (500) collectée.

2. Méthode selon la revendication 1, **caractérisée en ce que** le circuit d'eau de procédé (20) comprend un premier séparateur solide-liquide gravitationnel (21a) pour égoutter la sousverse de classificateur (122) pour séparer un premier sédiment (212a) d'un surnageant (211a) comprenant au moins de l'eau et des particules fines non récupérées comprenant le matériau de valeur ; le premier sédiment étant agencé pour s'écouler dans le circuit de filtration (14) pour la récupération du matériau de valeur et le surnageant étant collecté dans le réservoir d'eau de récupération (25) en tant qu'eau de procédé (500) collectée.

3. Méthode selon la revendication 2, **caractérisée en ce que**, avant de diriger le surnageant (211a) provenant du premier séparateur solide-liquide gravitationnel (21a) dans le réservoir d'eau de récupération (25), le surnageant est soumis à une flottation de nettoyage, dans laquelle au moins 90 % des bulles de gaz de flottation ont une taille de 0,2 à 250 µm, dans une première unité de flottation de nettoyage (23a) pour collecter au moins des particules fines non récupérées comprenant le matériau de valeur ; pour séparer des particules fines comprenant le matériau de valeur du surnageant pour obtenir une surverse de flottation de nettoyage (231a) en tant que matériau de valeur récupéré ; et pour former de l'eau de procédé purifiée (232a) en tant que sousverse de flottation de nettoyage ; et **en ce que** l'eau de procédé purifiée est remise en circulation dans la ligne de flottation minérale (10), ou collectée dans le réservoir d'eau de récupération (25) en tant qu'eau de procédé (500) collectée.

4. Méthode selon l'une quelconque des revendications 1 à 3, **caractérisée en ce que** le circuit d'eau de procédé (20) comprend un deuxième séparateur solide-liquide gravitationnel (21b) pour égoutter la surverse de classificateur (121) pour séparer un deuxième sédiment (212b) d'un surnageant (211b) comprenant au moins de l'eau et des particules fines non récupérées comprenant le matériau de valeur ; le deuxième sédiment (212b) étant dirigé dans le circuit de flottation (13) minérale en tant qu'alimentation en bouillie ; et le surnageant (211b) étant collecté dans le réservoir d'eau de récupération (25) en tant qu'eau de procédé (500) collectée.

5. Méthode selon l'une quelconque des revendications 1 à 4, **caractérisée en ce que** le circuit d'eau de procédé (20) comprend un troisième séparateur solide-liquide gravitationnel (21c) pour égoutter la surverse de nettoyage (131b) provenant du circuit de flottation (13) pour séparer un troisième sédiment (212c) d'un surnageant (211c) comprenant au moins de l'eau et des particules fines non récupérées comprenant le matériau de valeur ; le surnageant (211c) étant collecté dans le réservoir d'eau de récupération (25) en tant qu'eau de procédé (500) collectée.

6. Méthode selon l'une quelconque des revendications 1 à 5, **caractérisée en ce que** le circuit d'eau de procédé (20) comprend un quatrième séparateur solide-liquide gravitationnel (21d) pour égoutter la sousverse de dégrossissage (132a) provenant du circuit de flottation (13) pour séparer un quatrième sédiment (212d) d'un surnageant (211d) comprenant au moins de l'eau et des particules fines non récupérées comprenant le matériau de valeur ; le surnageant (211d) étant collecté dans le réservoir d'eau de récupération (25) en tant qu'eau de procédé (500) collectée.

7. Méthode selon l'une quelconque des revendications 1 à 6, **caractérisée en ce que**, avant de remettre en circulation l'eau de procédé (500) collectée provenant du réservoir d'eau de récupération (50) dans la ligne de flottation minérale (10), l'eau de procédé collectée est soumise à une flottation de nettoyage, dans laquelle au moins 90 % des bulles de gaz de flottation ont une taille de 0,2 à 250 µm, dans une seconde unité de flottation de nettoyage (23b) pour collecter au moins des particules fines non récupérées comprenant le matériau de valeur, pour séparer des particules fines comprenant le matériau de valeur de l'eau de procédé collectée pour obtenir une surverse de flottation de nettoyage (231b) en tant que matériau de valeur récupéré, et pour former de l'eau de procédé purifiée (232b) en tant que sousverse de flottation de nettoyage ; et **en ce que** l'eau de procédé purifiée est remise en circulation dans la ligne de flottation minérale (10).

8. Méthode selon l'une quelconque des revendications 1 à 7, **caractérisée en ce que**, avant de diriger une surverse et/ou une sousverse à partir de la ligne de flottation minérale (10) jusqu'à un séparateur solide-liquide gravitationnel (21, 21a, 21b, 21c, 21d), la concentration de la surverse et/ou de la sousverse est ajustée sur 0,5 à 15 % en poids.

9. Méthode selon la revendication 8, **caractérisée en ce qu'**un écoulement turbulent de la surverse et/ou de la sousverse provenant de la ligne de flottation minérale (10) est ajusté pour obtenir un écoulement laminaire alors qu'il est dirigé dans le séparateur solide-liquide gravitationnel (21, 21a, 21b, 21c, 21d).

10. Méthode selon l'une quelconque des revendications 1 à 9, **caractérisée en ce qu'**au moins 40 % de particules fines comprenant le matériau de valeur, non récupérées dans la ligne de flottation minérale (10), sont récupérées dans le surnageant (211, 211a, 211b, 211c, 211d) d'un séparateur solide-liquide gravitationnel (21, 21a, 21b, 21c, 21d).

11. Méthode selon l'une quelconque des revendications 1 à 10, **caractérisée en ce que** le temps de séjour de la surverse et/ou de la sousverse provenant de la ligne de flottation minérale (10) dans le séparateur solide-liquide gravitationnel (21, 21a, 21b, 21c, 21d) est de moins de 10 heures, de préférence de 0,5 à 8 heures.

12. Méthode selon l'une quelconque des revendications 1 à 11, **caractérisée en ce que**, avant de diriger le surnageant (211, 211a, 211b, 211c, 211d) provenant d'un séparateur solide-liquide gravitationnel (21, 21a, 21b, 21c, 21d) dans une flottation de nettoyage, le surnageant est dirigé dans un réservoir de surverse de séparateur (22a).

13. Méthode selon l'une quelconque des revendications 1 à 12, **caractérisée en ce que**, avant de diriger le surnageant (211, 211a, 211b, 211c, 211d) provenant d'un séparateur solide-liquide gravitationnel (21, 21a, 21b, 21c, 21d) dans une flottation de nettoyage, le surnageant est dirigé dans une unité de mélange (22b) pour conditionner chimiquement le surnageant en ajoutant un coagulant et/ou un floculant pour floculer au moins des particules fines comprenant le matériau de valeur dans le surnageant.

14. Méthode selon la revendication 13, **caractérisée en ce que** le coagulant est choisi dans un groupe comprenant : un collecteur inorganique, des sels d'aluminium, des sels de fer, des coagulants organiques.

15. Méthode selon la revendication 13 ou 14, **caractérisée en ce qu'**un coagulant est ajouté dans le surnageant (211, 211a, 211b, 211c, 211d) en une quantité de 1 à 2000 ppm.

16. Méthode selon l'une quelconque des revendications 13 à 15, **caractérisée en ce que** le floculant est choisi dans un groupe comprenant : des polymères naturels, des floculants synthétiques.

17. Méthode selon l'une quelconque des revendications 13 à 16, **caractérisée en ce qu'**un floculant est ajouté dans le surnageant (211, 211a, 211b, 211c, 211d) en une quantité de 1 à 100 ppm.

18. Méthode selon l'une quelconque des revendications 1 à 17, **caractérisée en ce que** la température du surnageant (211, 211a, 211b, 211c, 211d) est ajustée sur 2 à 60 °C avant de le diriger dans une unité de flottation de nettoyage (23, 23a, 23b).

19. Méthode selon l'une quelconque des revendications 1 à 18, **caractérisée en ce que** le pH du surnageant est ajusté sur 6 à 12 avant de le diriger dans une unité de flottation de nettoyage (23, 23a, 23b).

20. Méthode selon l'une quelconque des revendications 1 à 19, **caractérisée en ce que** l'unité de flottation de nettoyage (23, 23a, 23b, 23c) est une unité de flottation à l'air dissous (DAF).

21. Méthode selon l'une quelconque des revendications 1 à 20, **caractérisée en ce que** le matériau de valeur est du Li.

22. Méthode selon l'une quelconque des revendications 1 à 20, **caractérisée en ce que** le matériau de valeur est du Pt.

23. Agencement de traitement d'eau de procédé d'une installation de flottation (1) pour la récupération d'un matériau de valeur, l'installation de flottation comprenant une ligne de flottation minérale (10), la ligne de flottation minérale comprenant
- un broyeur (11) ;
- un circuit de classification (12) pour classer une charge de minerai broyé provenant du broyeur en une surverse de classificateur (121) et une sousverse de classificateur (122) ; et
- un circuit de flottation (13) minérale pour traiter des particules de minerai comprenant le matériau de valeur et en suspension dans une bouillie, le circuit de flottation minérale comprenant une partie de dégrossissage (13a) pour la séparation d'une alimentation en bouillie pour obtenir une surverse de dégrossissage (131a) de matériau de valeur récupéré et une sousverse de dégrossissage (132a) de rejet, et une partie de nettoyage (13b) agencée pour recevoir la surverse de dégrossissage (131a) provenant de la partie de dégrossissage en tant qu'alimentation en bouillie, pour la séparation de la bouillie en une surverse de nettoyage (131b) de matériau de valeur récupéré et une sousverse de nettoyage (132b) agencée pour refluer dans la partie de dégrossissage en tant qu'alimentation en bouillie,
l'installation de flottation (1) comprenant en outre un circuit d'eau de procédé (20) pour traiter une sousverse et/ou une surverse de la ligne de flottation minérale, le circuit de traitement d'eau de procédé comprenant un séparateur solide-liquide gravitationnel (21) agencé pour égoutter la sousverse et/ou la surverse de la ligne de flottation minérale pour séparer un sédiment (212) d'un surnageant (211) comprenant au moins de l'eau et des particules fines non récupérées comprenant le matériau de valeur ; et un réservoir d'eau de récupération (25) pour collecter de l'eau de procédé (500) comprenant la surverse et/ou la sousverse provenant de la ligne de flottation minérale,
**caractérisé en ce que** le circuit de traitement d'eau (20) comprend en outre une unité de flottation de nettoyage (23) employant des bulles de gaz de flottation dont au moins 90 % ont une taille de 0,2 à 250 µm, reliée de manière fonctionnelle au séparateur solide-liquide gravitationnel (21) pour recevoir le surnageant (211) avant qu'il ne soit dirigé dans le réservoir d'eau de récupération, et agencée pour collecter au moins des particules fines non récupérées comprenant le matériau de valeur ; pour séparer des particules fines comprenant le matériau de valeur du surnageant pour obtenir une surverse de flottation de nettoyage (231) en tant que matériau de valeur récupéré ; et pour former de l'eau de procédé purifiée (232) en tant que sousverse de flottation de nettoyage configurée pour être remise en circulation dans la ligne de flottation minérale (10), ou collectée dans le réservoir d'eau de récupération (25) en tant qu'eau de procédé (500) collectée.

24. Agencement selon la revendication 23, **caractérisé en ce que** le circuit d'eau de procédé (20) comprend un premier séparateur solide-liquide gravitationnel (21a) agencé pour égoutter la sousverse de classificateur (122) pour séparer un premier sédiment (212a) d'un surnageant (211a) comprenant au moins de l'eau et des particules fines non récupérées comprenant le matériau de valeur ; le premier sédiment étant agencé pour s'écouler dans le circuit de filtration (14) pour la récupération du matériau de valeur ; le surnageant étant configuré pour être collecté dans le réservoir d'eau de récupération (25) en tant qu'eau de procédé (500) collectée.

25. Agencement selon la revendication 24, **caractérisé en ce que** le circuit de traitement d'eau (20) comprend une première unité de flottation de nettoyage (23a) employant des bulles de gaz de flottation dont au moins 90 % ont une taille de 0,2 à 250 µm, reliée de manière fonctionnelle au premier séparateur solide-liquide gravitationnel (21a) pour recevoir le surnageant (211a), et agencée pour collecter au moins des particules fines non récupérées comprenant le matériau de valeur ; pour séparer des particules fines comprenant le matériau de valeur du surnageant pour obtenir une surverse de flottation de nettoyage (231a) en tant que matériau de valeur récupéré ; et pour former de l'eau de procédé purifiée (232a) en tant que sousverse de flottation de nettoyage configurée pour être remise en circulation dans la ligne de flottation minérale (10), ou collectée dans le réservoir d'eau de récupération (25) en tant qu'eau de procédé (500) collectée.

26. Agencement selon l'une quelconque des revendications 23 à 25, **caractérisé en ce que** le circuit d'eau de procédé (20) comprend un deuxième séparateur solide-liquide gravitationnel (21b) agencé pour égoutter la surverse de classificateur (121) pour séparer un deuxième sédiment (212b) d'un surnageant (211b) comprenant au moins de l'eau et des particules fines non récupérées comprenant le matériau de valeur ; le deuxième sédiment (212b) étant agencé pour s'écouler dans le circuit de flottation (13) minérale en tant qu'alimentation en bouillie ; et le surnageant (211b) étant configuré pour être collecté dans le réservoir d'eau de récupération (25) en tant qu'eau de procédé (500) collectée.

27. Agencement selon l'une quelconque des revendications 23 à 26, **caractérisé en ce que** le circuit d'eau de procédé (20) comprend un troisième séparateur solide-liquide gravitationnel (21c) agencé pour égoutter la surverse de nettoyage (131b) provenant du circuit de flottation (13) minérale pour séparer un troisième sédiment (212c) d'un surnageant (211c) comprenant au moins de l'eau et des particules fines non récupérées comprenant le matériau de valeur ; le surnageant (211c) étant configuré pour être collecté dans le réservoir d'eau de récupération (25) en tant qu'eau de procédé (500) collectée.

28. Agencement selon l'une quelconque des revendications 23 à 27, **caractérisé en ce que** le circuit d'eau de procédé (20) comprend un quatrième séparateur solide-liquide gravitationnel (21d) agencé pour égoutter la sousverse de dégrossissage (132a) provenant du circuit de flottation (13) minérale pour séparer un quatrième sédiment (212d) d'un surnageant (211d) comprenant au moins de l'eau et des particules fines non récupérées comprenant le matériau de valeur ; le surnageant (211d) étant configuré pour être collecté dans le réservoir d'eau de récupération (25) en tant qu'eau de procédé (500) collectée.

29. Agencement selon l'une quelconque des revendications 23 à 28, **caractérisé en ce que** le circuit d'eau de procédé (20) comprend en outre une seconde unité de flottation de nettoyage (23b) employant des bulles de gaz de flottation dont au moins 90 % ont une taille de 0,2 à 250 µm, reliée de manière fonctionnelle au réservoir d'eau de récupération (25) pour recevoir l'eau de procédé (500) collectée, et agencée pour collecter au moins des particules fines non récupérées comprenant le matériau de valeur, pour séparer des particules fines comprenant le matériau de valeur de l'eau de procédé collectée pour obtenir une surverse de flottation de nettoyage (231b) en tant que matériau de valeur récupéré, et pour former de l'eau de procédé purifiée (232b) en tant que sousverse de flottation de nettoyage ; l'eau de procédé purifiée est configurée pour être remise en circulation dans la ligne de flottation minérale (10).

30. Agencement selon l'une quelconque des revendications 23 à 29, **caractérisé en ce que** le circuit d'eau de procédé (20) comprend un réservoir de surverse de séparateur (22a) dans lequel le surnageant (211, 211a, 211b, 211c, 211d) provenant d'un séparateur solide-liquide gravitationnel (21, 21a, 21b, 21c, 21d) est configuré pour s'écouler avant d'être dirigé dans une flottation de nettoyage.

31. Agencement selon l'une quelconque des revendications 23 à 30, **caractérisé en ce que** le circuit d'eau de procédé (20) comprend en outre une unité de mélange (22b) dans laquelle le surnageant (211, 211a, 211b, 211c, 211d) provenant d'un séparateur solide-liquide gravitationnel (21, 21a, 21b, 21c, 21d) est configuré pour s'écouler avant d'être dirigé dans une flottation de nettoyage, l'unité de mélange étant agencée pour conditionner chimiquement le surnageant pour floculer au moins des particules fines comprenant le matériau de valeur dans le surnageant.

32. Agencement selon l'une quelconque des revendications 23 à 31, **caractérisé en ce que** l'unité de flottation de nettoyage (23, 23a, 23b, 23c) est une unité de flottation à l'air dissous (DAF).

33. Utilisation de l'agencement selon l'une quelconque des revendications 23 à 32 pour récupérer un matériau de valeur dans un minerai ayant une densité de moins de 4 g/cm³, de préférence de 2,4 à 3,2 g/cm³.

34. Utilisation selon la revendication 33 pour récupérer du Li.

35. Utilisation selon la revendication 34 pour récupérer du Li dans du spodumène.

36. Utilisation selon la revendication 33 pour récupérer du Pt.

37. Utilisation selon la revendication 36 pour récupérer du Pt dans un minéral PGM.
